# NOUVEAU FASCICULE DE BREVET EUROPEEN

(11) **EP 1 250 225 B2**
(45) Date de publication et mention de la décision concernant l'opposition: **23.07.2008**
(45) Mention de la délivrance du brevet: 10.08.2005
(21) Numéro de dépôt: 00991293.2
(22) Date de dépôt: 28.12.2000
(51) Int. Cl.: B32B 27/32

(54) **FILM MULTICOUCHE MICROPOREUX ET SON PROCEDE DE PRODUCTION**
MIKROPORÖSER MEHRSCHICHTFILM UND VERFAHREN ZU DESSEN HERSTELLUNG
MICROPOROUS MULTILAYER FILM AND METHOD FOR MAKING SAME

(30) Priorité: 28.12.1999 FR 9916598
(43) Date de publication de la demande: 23.10.2002
(73) Titulaire: Trioplanex France S.A., 80610 Saint Ouen (FR)
(72) Inventeur: GUSTAFSON, Bo, S-22655 Lund (SE)
(74) Mandataire: Gaucherand, Michel
(86) Numéro de dépôt international: PCT/FR2000/003729
(87) Numéro de publication internationale: WO 2001/047710

(56) Documents cités:
- WO-A-96/19346
- WO-A-97/04955
- WO-A-98/58799
- WO-A-99/14047
- WO-A-99/14262
- US-A- 4 728 478
- US-A- 5 164 258

## Description

### Domaine de l'invention

L'invention concerne un procédé de production d'un film multicouche microporeux, imperméable aux liquides, mais perméable aux gaz et plus particulièrement à la vapeur d'eau.

L'invention concerne plus particulièrement, un procédé de production d'un film multicouche, microporeux, imperméable aux liquides, mais perméable à la vapeur d'eau par coextrusion de compositions thermoplastiques constituées de mélanges de polymères et/ou de copolymères oléfiniques et éventuellement de charges particulaires, chaque couche du film ayant une composition spécifique.

L'invention concerne également un film mince à structure multicouche microporeux, imperméable aux liquides et perméable à la vapeur d'eau, ainsi que les produits laminés associant ledit film à au moins un tissu non tissé et les articles d'hygiène jetables, tels que couches pour enfants, pour adultes incontinents ou d'hygiène féminine, mettant en oeuvre le film microporeux et/ou le produit laminé.

### Etat de l'art

Les films réalisés au moyen de polymères sont naturellement étanches aux liquides et à la vapeur d'eau : ils constituent une véritable barrière à ces matières.

Quand ces films barrières sont mis en oeuvre comme composants d'articles sanitaires jetables, tels que les couches pour enfants ou pour adultes incontinents, ou encore dans les articles d'hygiène féminine, ils peuvent provoquer des irritations de la peau, un inconfort certain, l'humidité ne pouvant pas s'échapper de l'article quand il est en cours d'utilisation. C'est pourquoi, un effort de recherche approfondi s'est particulièrement développé dans le domaine des films destinés à la construction des couches pour enfants, pour adultes incontinents et des articles d'hygiène féminine, portant sur la respirabilité du film, sur son toucher textile, plus particulièrement quand il s'agit du film (arrière) externe.

Plusieurs procédés ont été développés pour produire des films polymères imperméables à l'eau mais perméables à la vapeur d'eau (perméabilité aux gaz) avec une vitesse de transmission élevée.

Ces procédés, pour la plupart, ont abouti à la production de films respirables (parce que perméables aux gaz), mettant en oeuvre l'un ou l'autre des moyens permettant la création physique d'une microporosité dans lesdits films, ou utilisant des polymères spécifiques, tels que des polymères hydrophiles, dont les structures de chaîne facilitent tout à la fois l'absorption de la vapeur d'eau et le transfert des gaz.

Quant à la microporosité des films produits selon les procédés connus, elle peut être réalisée par de nombreuses méthodes, incluant par exemple la microperforation mécanique.

Toutefois, la méthode la plus fréquemment mise en oeuvre pour la fabrication de films microporeux, consiste, dans une première étape, à mettre en oeuvre un mélange de polymères et de charges minérales qui est extrudé (ou extrudé soufflé) sous la forme d'un film précurseur, puis dans une deuxième étape, à soumettre ce film précurseur à une opération d'étirage dans le sens longitudinal et/ou dans le sens transversal, à une température plus basse que celle du point de fusion du mélange de polymères, pour créer une multiplicité de pores ou de micro-trous.

De tels pores (ou micro-trous) ont des diamètres suffisamment petits pour empêcher le passage des liquides, mais permettre le transfert de gaz (vapeur d'eau) à des vitesses de transmission allant de la plus modérée, jusqu'à très élevée.

Le domaine des propriétés affichées par les systèmes basés sur les polyoléfines indique que procédés et matières premières jouent un rôle critique dans la détermination du profil des propriétés finales : les micrographies par microscope électronique permettent d'illustrer par exemple les différences dans la forme des pores des films étirés uniaxialement ou biaxialement.

Le test consistant à déterminer la vitesse de transmission de la vapeur d'eau est un moyen pour mesurer la respirabilité du film, c'est-à-dire la masse ou le volume de gaz transféré à travers l'épaisseur, pour une unité de surface et par unité de temps, dans des conditions environnementales bien définies.

De plus, les films perméables aux gaz (respirables) et imperméables aux liquides, peuvent avoir une structure monocouche ou plus récemment multicouche. Les films à structure multicouche sont bien connus dans le domaine de l'emballage alimentaire comportant une barrière à oxygène. Ces films à structure multicouche sont destinés à combiner différentes familles de polymères incompatibles entre elles, qui, dès lors, nécessitent pour leur assemblage en un film, la présence de polymères à fonctionnalité, ayant un caractère polaire. Ces films à structure multicouche peuvent être réalisés soit par un procédé consistant en une coextrusion (directe ou simultanée) de toutes les couches, suivie de leur étirage, soit par un procédé d'assemblage par laminage de plusieurs couches (préalablement extrudées ou étirées), soit encore par un procédé d'extrusion couchage sur une couche déjà existante, telle qu'un tissu non tissé, suivi d'un étirage.

Des exemples de tels films à structure multicouche, respirables, mais étanches aux liquides, ont été décrits dans de nombreux documents.

Le brevet US 5,164,258 décrit un film à structure multicouche perméable à la vapeur d'eau qui comporte des couches externes réalisées en un matériau polymère hydrophobe microporeux et une couche de coeur faite d'un matériau polymère hygroscopique, manifestant, quand il est sec, une capacité très importante de barrière à l'oxygène, mais perdant cette propriété quand il est humide. Ce film à structure multicouche comporte également des couches adhésives disposées entre les couches externes et la couche de coeur. Ce brevet précise que la vitesse de transmission de la vapeur d'eau pour les couches externes doit être d'environ 500 g/m²/24h, pour pouvoir évacuer l'humidité résultant du traitement de stérilisation. Ainsi, le film à structure multicouche est spécifiquement adapté à l'application à l'emballage (nécessitant une barrière à oxygène) et ne peut être mis en oeuvre, dans le domaine des applications sanitaires ou d'hygiène.

Le brevet US 4,828,556 décrit une structure multicouche consistant en un film respirable en matériaux.polymères, formant barrière aux liquides, disposé entre deux couches de tissus non tissés microporeux. Cette structure comprend une feuille poreuse, revêtue, par couchage, d'un film d'alcool polyvinylique ou laminée avec un film d'alcool polyvinylique préalablement réalisé.

Aucune adhésivité supplémentaire n'est nécessaire, car le film d'alcool polyvinylique agit à la fois comme une couche adhésive et comme une couche perméable à la vapeur d'eau.

Le brevet US 4,758,239 décrit également une structure multicouche respirable formant barrière aux liquides, qui comporte une première couche faite d'un tissu non tissé poreux et d'une seconde couche liée à l'une des faces de la première couche. Cette seconde couche est formée par un film continu, réalisé par couchage au moyen d'un matériau polymère hydrosoluble : ce film n'est pas microporeux en ce sens qu'il ne comporte pas substantiellement de pores, mais il peut être traversé, dans son épaisseur, par les molécules d'eau qui sont solubles dans la matière du film, et qui sont transférées d'une surface à l'autre dudit film.

A la place d'un film réalisé par couchage, le film continu peut être un film préalablement formé, réalisé au moyen d'un matériau polymère hydrosoluble, qui est laminé avec la première couche de ladite structure, faite d'un tissu non tissé poreux. Dans une réalisation préférée, le matériau polymère hydrosoluble est un alcool polyvinylique.

Ces diverses structures multicouches sont réalisées au moyen de familles de polymères différents dans les différentes couches : les alcools polyvinyliques sont connus pour être plus difficiles à transformer que les polyoléfines.

La demande internationale de brevet n° WO97/04955 décrit une méthode pour réaliser un film respirable à structure multicouche symétrique. La structure de ce film respirable comporte plus particulièrement cinq couches, la première étant la couche centrale, deux autres étant les couches de peau et les deux dernières étant les couches d'adhésion entre les couches de peau et la couche centrale. Ces diverses couches sont réalisées au moyen de deux familles différentes de polymères :
- la couche centrale est faite d'un mélange de polyoléfines et de charges minérales,
- les couches de peau sont réalisées avec des matières polymères hydrophiles substantiellement libres de charges minérales,
- les couches intermédiaires d'adhésion sont composées d'un mélange des polymères (recyclés) provenant des couches constituant les peaux et le coeur du film respirable, pour permettre l'adhésion, entre elles, de ces trois couches.

D'autres exemples de films à structure multicouche, respirables, mais étanches aux liquides sont décrits dans les documents WO 98/58799, WO 96/19346, WO 99/14047 et WO 99/14262.

Tous ces procédés de fabrication de films à structure multicouche présentent des inconvénients (de réalisation) majeurs, dont certains sont mentionnés ci-après :
- tout d'abord, les polymères hydrophiles, voire hydrosolubles, mis en oeuvre comme matière première pour la réalisation du film imperméable mais respirable, sont d'un coût économique très élevé, par comparaison avec les polyoléfines qui sont simultanément mis en oeuvre dans la structure dudit film ;
- de plus, ces structures multicouches symétriques ne sont pas particulièrement conçues pour permettre leur assemblage ultérieur, car leur conception est essentiellement orientée sur la recherche d'une respirabilité maximum ;
- en outre, il est également connu que les procédés de coextrusion pour la fabrication d'un film à structure multicouche sont techniquement critiques, de réglage difficile, en raison des écarts de viscosité existant entres les différentes familles de polymères constituant les différentes couches ;
- enfin, les procédés de fabrication par coextrusion d'un film à structure multicouche sont difficiles à conduire quand, pour des raisons de productivité, ils doivent être conduits en marche rapide.

### Objectifs de l'invention

Dès lors, l'invention poursuit un certain nombre d'objectifs, pour éliminer les inconvénients précités.

Tout au long de la description de l'objet de l'invention, la perméabilité du film aux gaz en général s'exprimera par la perméabilité dudit film à la vapeur d'eau.

Un premier objet de l'invention est de créer une méthode de fabrication d'un film à structure multicouche imperméable aux liquides et perméable à la vapeur d'eau, qui opère à des vitesses de production élevées et qui utilise des polyoléfines comme matières constitutives des diverses couches.

Un autre objet de l'invention est de créer ladite méthode de fabrication d'un film à structure multicouche, imperméable aux liquides mais perméable à la vapeur d'eau, à partir d'une coextrusion multicouche, d'une manière telle qu'existe une grande facilité d'adaptation de l'architecture des diverses couches. Plus particulièrement, la création d'une architecture asymétrique des couches de la structure est dans l'optique de l'invention, afin d'incorporer, dans le film multicouche, des moyens d'adhésion pour l'assemblage ultérieur dudit film avec d'autres structures, telles que du tissu non tissé par exemple.

Un autre objet de l'invention est :
- d'optimiser la méthode de fabrication par coextrusion du film à structure multicouche, imperméable aux liquides mais perméable à la vapeur d'eau, grâce à des compositions spécifiques des couches de peau, des viscosités de matériaux constitutifs des couches bien adaptées entre lesdites couches (pour des conditions de vitesse élevée et de température données), une excellente compatibilité entre les couches, et
- de réduire les risques d'amoncellement de matières polymères à la filière, diminuant ainsi la fréquence d'intervention pour son nettoyage.

Un autre objet de l'invention est d'éliminer toutes les matières volatiles présentes (humidité, air ou autres), dans les mélanges de matières premières, qui pourraient être libérées par chauffage, lors de l'extrusion, et qui pourraient perturber la formation contrôlée des pores des diverses couches du film microporeux.

Un autre objet de l'invention est d'optimiser la respirabilité du film à structure multicouche, c'est-à-dire la vitesse de transmission de la vapeur d'eau pour la structure finale, tout en maintenant l'imperméabilité du film aux liquides.

Un autre objet de l'invention est de réaliser, selon ladite méthode, un film mince à structure multicouche, imperméable aux liquides et perméable à la vapeur d'eau, résistant cependant suffisamment à la déchirure, qui puisse être utilisé comme film arrière des couches pour enfants, pour adultes incontinents et des articles d'hygiène féminine, assemblé par laminage à un tissu non tissé, le produit laminé en résultant étant mis en oeuvre dans les articles précités.

### Sommaire de l'invention

L'invention concerne une méthode de fabrication d'un film polyoléfinique à structure multicouche, ayant simultanément les propriétés d'être perméable à la vapeur d'eau, et d'être imperméable aux liquides, cette méthode comprenant les étapes de :
- la coextrusion, à partir d'une filière, d'au moins trois couches composées de matériaux polymères thermoplastiques, formant un film précurseur ayant au minimum la structure suivante : ABC, ou ABA, où "A" est une couche de peau, "B" est une couche centrale et "C" est une couche de peau/d'adhésion ;
- l'étirage du film précurseur à multicouches coextrudées pour former le film multicouche perméable à la vapeur d'eau mais imperméable aux liquides,
   où :
   - la couche de peau "A" contient au moins un copolymère polyoléfinique thermoplastique polaire et/ou un polymère polyoléfinique greffé, ayant un module E inférieur à 50 mPa (norme ASTM n° 882 - film de 15 µm par coulée - cast film) une mesure de fluidité par "Melt Flow Index" (MFI norme ASTM D1238 2,16 kg, 190°C pour les polyéthylènes et 230°C pour les polypropylènes), comprise entre 1,5 et 10 g/10 min et une vitesse de transmission de la vapeur d'eau d'au moins 100 g/m²/24h à 38°C et 90 % d'humidité relative;
   - la couche centrale "B" contient au moins un homopolymère et/ou un copolymère polyoléfinique thermoplastique, au moins une charge particulaire et éventuellement un ou plusieurs élastomères ;
   - la couche de peau/d'adhésion "C" contient au moins un agent liant d'adhésion et/ou un homopolymère et/ou copolymère polyoléfinique thermoplastique et au moins une charge particulaire.

L'invention concerne également un film mince à structure multicouche, perméable à la vapeur d'eau et imperméable aux liquides, utilisé aussi bien seul qu'assemblé par laminage avec un tissu non tissé, comme film arrière pour les articles sanitaires jetables, pour enfants, pour adultes incontinents et pour les articles d'hygiène féminine.

### Description détaillée de l'invention

Selon l'invention, l'étape d'extrusion, au cours de laquelle est formé le film précurseur, comprend la coextrusion simultanée d'au moins trois couches "A", "B" et "C", dont les épaisseurs de chacune d'entre elles, qui s'expriment en pourcentage de l'épaisseur totale du film multicouche respirable, sont préférentiellement les suivantes :
. de 5 % à 30 % d'épaisseur pour la couche "A",
. de 40 % à 90 % d'épaisseur pour la couche "B",
. de 5 % à 30 % d'épaisseur pour la couche "C".

Lesdites couches "A", "B" et "C" sont entièrement composées de matières polyoléfiniques.

### Couche centrale "B"

La couche centrale "B", selon l'invention qui est rendue microporeuse par étirage, est formée d'au moins un homopolymère et/ou un copolymère polyoléfinique et d'au moins une charge particulaire, et éventuellement d'un ou de plusieurs élastomères à base de polyoléfine.

Ces homopolymères ou copolymères sont choisis dans le groupe comprenant les polyéthylènes homo et/ou copolymères, préférentiellement les polyéthylènes linéaires à basse densité et/ou des polypropylènes homo et/ou copolymères.

Quand des polymères d'éthylène homo ou copolymères sont utilisés, ils sont choisis parmi ceux ayant une densité comprise dans l'intervalle 0,915 à 0,965 (norme ASTM 1505), et préférentiellement dans l'intervalle de plus basse densité de 0,915 à 0,935.

Quant aux polyéthylènes linéaires à basse densité, ils ont une densité comprise entre 0,890 et 0,940 et peuvent être choisis dans le groupe des copolymères d'éthylène et de comonomères alpha-oléfiniques tels que ceux en C4 à C10, pouvant être obtenus par exemple par polymérisation catalytique en présence d'un catalyseur, tel qu'un métallocène ou selon d'autres modes. Ces comonomères en C4 à C10 sont choisis, de préférence, dans le groupe comprenant le butène, le pentène, l'héxène, le 4-méthylpentène, l'héptène, et l'octène.

Les polymères de propylène homo ou copolymères incluent des homopolymères de propylène, des copolymères de propylène avec de l'éthylène, des copolymères de propylène avec des comonomères alpha-oléfiniques en C4 à C10. Pour les copolymères de propylène, un ou plusieurs comonomères alpha-oléfiniques peuvent être utilisés. Les copolymères de propylène alpha-oléfinique doivent avoir une teneur en alpha-oléfine comprise entre 0,1 et 40 % en poids, et de préférence encore de 1 à 10 % en poids.

Lorsque des copolymères de polypropylène sont utilisés, ils sont préférentiellement choisis dans le groupe des copolymères d'éthylène-propylène.

Les polymères et/ou copolymères de la couche centrale "B" sont choisis de telle manière que l'indice de fluidité mesuré par la méthode de "Melt Flow Index" (MFI) soit compris entre 0,2 et 15 g/10 min, mesuré selon les références d'une charge de 2,16 kg, d'une température de 190°C pour les polyéthylènes et 230°C pour les polypropylènes avec un orifice standard (norme ASTM D 1238).

Pour le procédé par coulée (cast process), l'indice de fluidité peut varier de 0,8 à 15 g/10 min, et pour le procédé de soufflage (blown process) de 0,2 à 10,0 g/10 min.

Toutefois, la couche centrale "B" est de préférence fabriquée à partir d'un polyéthylène linéaire à faible densité.

Tous.ces polymères ou copolymères peuvent être formulés avec des agents glissants et des agents antibloquants, de même qu'avec des agents antioxydants et stabilisants.

La couche centrale "B" selon l'invention contient également au moins une charge particulaire à raison de 30 à 80 % en poids et préférentiellement de 45 à 55 % en poids du cumul de ladite charge particulaire et de la matière polymère.

Ces charges particulaires connues dans l'état de la technique, peuvent provenir de tous matériaux organiques ou inorganiques ayant une faible affinité pour l'eau naturellement ou par un traitement approprié et une rigidité par opposition à l'élasticité de la matière polymère.

Les charges particulaires organiques peuvent comprendre, par exemple, des polymères avec un haut point de fusion et/ou à haute viscosité et dont les particules ont une taille compatible avec l'étape d'étirage du procédé. De tels polymères sont, par exemple, des polyéthylènes, des polypropylènes, des polyamides, des polyesters, des polyuréthanes à haute densité et de poids moléculaire extrêmement élevé.

Les charges particulaires inorganiques peuvent comprendre des sels de métaux, tels que du carbonate de baryum ; du carbonate de calcium ; du carbonate de magnésium ; du sulfate de magnésium ; du sulfate de baryum ; du sulfate de calcium, des hydroxydes de métaux, tels que l'hydroxyde d'aluminium ; l'hydroxyde de magnésium, des oxydes de métaux, tels que de l'oxyde de calcium ; de l'oxyde de magnésium ; du dioxyde de titane et de l'oxyde de zinc, ou d'autres matériaux particulaires, tels que l'argile, du kaolin, du talc, de la silice, de la terre à diatomées, de la poudre de verre, de mica, d'aluminium et des zéolites.

Les charges particulaires inorganiques sont préférentiellement choisies dans le groupe constitué par le carbonate de calcium, le sulfate de baryum, la silice, l'alumine, le kaolin, et le talc.

Le carbonate de calcium est particulièrement préféré en raison de son coût économique, de sa blancheur, de son inertie et de sa disponibilité.

Les charges particulaires inorganiques (telles que le carbonate de calcium) peuvent être traitées en surface pour les rendre hydrophobes, et pour améliorer la liaison de la charge avec le polymère. Un revêtement préféré est le stéarate de calcium qui est utilisé dans l'alimentation. Mais, d'autres revêtements sont possibles.

Bien que la quantité de charges particulaires introduite dans la couche centrale "B" ait été antérieurement mentionnée, il est souhaitable de préciser les raisons des limites en pour cent en poids déjà évoquées.

En effet, la quantité de charges particulaires ajoutée aux polyoléfines dépend des propriétés souhaitées pour le film respirable, qui doit posséder entre autres une bonne résistance à la déchirure, une vitesse de transmission de vapeur d'eau suffisante et une élasticité également suffisante. Cependant, il apparaît qu'un film ne peut pas être suffisamment respirable quand il est fabriqué avec une quantité de charges inférieure à environ 30 % en poids de la composition polyoléfine-charges. Ainsi, la quantité minimum de 30 % en poids de charges est nécessaire pour assurer la création d'une microporosité utile du film lors de l'étirage. De plus, il apparaît que les films ne peuvent pas être mis en oeuvre avec une quantité de charges supérieure à environ 80 % en poids de la composition polyoléfine-charges car des quantités plus importantes de charges peuvent causer des problèmes lors du mélange et provoquer des pertes significatives de respirabilité pour le film.

C'est pourquoi, la quantité de charges particulaires entrant dans la composition des couches selon l'invention est comprise entre environ 30 % et 80 % en poids, par rapport au cumul de la matière polymère et de la charge.

Les diamètres moyens des charges particulaires mises en oeuvre dans l'invention sont choisis entre 0,5 et 5 µm, et de préférence entre 0,8 et 2,2 µm pour la couche centrale "B", pour des films ayant une épaisseur comprise entre 20 et 100 µm avant étirage.

Les matières polymères et les charges mises en oeuvre dans cette invention peuvent être mélangées de différentes manières connues.

Selon l'invention, les élastomères mis en oeuvre dans la couche centrale "B", sont choisis dans le groupe constitué par les caoutchoucs éthylène-propylène (EPR), caoutchoucs modifiés éthylène-propylène-diène (EPDM), styrène-butadiène-styrène (SBS), styrène-éthylène-butadiène-styrène (SEBS), caoutchoucs styrène-butadiène (SBR), styrène-isoprène-styrène (SIS), caoutchoucs butyle (BR), caoutchoucs nitrile (NBR), caoutchoucs hydrogéno-nitrile-butyle et acétate polyvinyle ; ou utilisés conformément avec un mélange, (soit dans un réacteur ou par extrusion), de polymères semi-cristallins choisis parmi le polyéthylène et le polypropylène avec au moins un autre élastomère, tel que par exemple du polyéthylène/caoutchouc éthylène-propylène (PE/EPR), du polyéthylène/caoutchouc modifié éthylène-propylène-diène (PE/EPDM). Il est également possible que la fraction élastomérique soit partiellement ou complètement réticulée, ou appartienne au groupe des polypropylènes (homopolymères) avec des blocs amorphes et semi-cristallins et des copolymères de propylène/éthylène ou alpha-oléfine avec des blocs amorphes et semi-cristallins.

Tous ces polymères ou copolymères peuvent en outre contenir divers agents, tels que des agents glissants et antibloquants, des agents antioxydants et stabilisants.

Selon l'invention, comme la couche centrale "B" est la plus épaisse, et n'est pas en contact avec les lèvres de la filière, elle peut être utilisée pour recycler les déchets des matériaux multicouches récupérés dans le procédé, avant étirage ou après étirage, ou potentiellement après les étapes d'assemblage. La quantité de matériaux multicouches recyclés dans la couche centrale "B" peut varier de 0 à 30 % en poids, et est préférentiellement comprise entre 0 et 15 % en poids.

### Couche de peau "A"

La couche de peau "A" microporeuse selon l'invention est formée d'au moins un copolymère polyoléfinique ayant un module E inférieur à 50 mPa (ASTM 882). Ce copolymère est choisi dans le groupe formé par les copolymères polaires à base d'éthylène et/ou les polymères polyoléfiniques greffés.

De tels copolymères polaires et polymères polyoléfiniques greffés mettent en évidence des niveaux de cristallinité différents de ceux des versions homopolymères : ils présentent des propriétés de transfert de la vapeur d'eau plus importantes et des propriétés de douceur au toucher améliorées pour la couche considérée "A".

La perméabilité aux gaz et à la vapeur d'eau de ladite couche "A" est mesurée par la vitesse de transmission de vapeur d'eau (exprimée en g/m²/24 heures à une température donnée et une humidité relative donnée, par exemple à 38°C et 90 % pour une épaisseur donnée).

Les propriétés de douceur au toucher sont mesurées (selon le test tactile ASTM D882) par un module E qui doit être inférieur à 50 mPa.

Le copolymère éthylénique polaire mis en oeuvre dans la réalisation de la couche "A" est un copolymère composé d'éthylène et d'au moins un comonomère à caractère polaire choisi dans le groupe constitué par la famille des esters vinyliques, par la famille des acides et esters acryliques et méthacryliques. D'une manière préférentielle, le comonomère polaire peut être choisi dans le groupe constitué par l'acétate de vinyle, le propionate de vinyle, l'acide acrylique, l'acide méthacrylique et leurs esters tels que les acrylates ayant 4 à 8 atomes de carbone tels que l'acrylate de méthyle, l'acrylate d'éthyle, l'acrylate de n-propyle, l'acrylate d'isopropyle, l'acrylate de n-butyle, l'acrylate t-butyle, l'acrylate d'isobutyle et les méthacrylates ayant 4 à 8 atomes de carbone, tels que méthacrylate de méthyle, méthacrylate d'éthyle, méthacrylate de n-propyle, méthacrylate d'isopropyle, méthacrylate de n-butyle, méthacrylate de t-butyle et le méthacrylate d'isobutyle. Un ou plusieurs de ces comonomères peuvent être utilisés simultanément.

Les copolymères d'éthylène et d'au moins un comonomère polaire sont formés d'au plus 30 % en poids de comonomère. Une teneur en comonomère supérieure à 30 % en poids, copolymérisé avec de l'éthylène, engendre des problèmes d'odeur et d'adhésion.

Les copolymères d'éthylène et d'au moins un comonomère polaire doivent avoir un indice de fluidité compris dans l'intervalle de 1 à 10 g/10 min dans des conditions standard (MFI norme ASTM D 1238 - 2,16 kg - 190°C).

Les polymères polyoléfiniques greffés mis en oeuvre dans la réalisation de la couche "A" peuvent être fabriqués par greffage chimique au moyen d'acide acrylique, d'acide méthacrylique, d'anhydride maleïque et d'acrylates et méthacrylates d'alkyle dans lesquels l'alkyle est une chaîne hydrocarbonée de C1 à C8.

L'indice de fluidité de tels polymères greffés se situe dans le même intervalle que les copolymères polaires mentionnés précédemment.

Tous ces polymères ou copolymères peuvent contenir des agents glissants et antibloquants aussi bien que des agents antioxydants et stabilisants.

### Couche de peau/d'adhésion "C"

Selon l'invention, la couche de peau/d'adhésion "C" qui va devenir microporeuse lors de l'étirage, comprend au moins, un agent liant d'adhésion et/ou un homopolymère et/ou un copolymère polyoléfinique thermoplastique et au moins une charge particulaire.

Ces polymères polyoléfiniques sont choisis dans le groupe qui comprend des polyéthylènes, et de préférence des polyéthylènes linéaires à basse densité et/ou des polypropylènes et/ou des copolymères d'éthylène-propylène et d'éthylène et d'alpha-oléfine.

Les composants polyoléfiniques homopolymères et/ou copolymères de la couche de peau "C" microporeuse sont des polyéthylènes linéaires à basse densité de densité comprise entre 0,880 et 0,940, des copolymères d'éthylène et de comonomères alpha-oléfiniques, tels que ceux en C4 à C10 et/ou un polyéthylène de densité comprise entre 0,915 et 0,965, et de préférence entre 0,915 et 0,935 et/ou un polypropylène, et un copolymère de propylène et d'éthylène choisi de préférence dans un groupe de copolymères bloc aléatoires.

L'évolution actuelle des marchés conduit à des exigences plus fonctionnelles pour de tels films respirables, imperméables aux liquides, comprenant un revêtement doux au toucher et une capacité à être assemblés avec des tissus non tissés. Comme dans la plupart des cas, les films microporeux ont une capacité extensible modeste et une résistance assez faible à la déchirure, ils sont souvent combinés avec un substrat qui peut être par exemple un tissu non tissé, pour améliorer leur résistance mécanique.

Selon l'invention, l'agent adhésif/liant présent dans la couche de peau/d'adhésion "C" est choisi dans le groupe des copolymères d'éthylène et de comonomères polaires ou non polaires, des copolymères de propylène et de comonomères polaires ou non polaires et/ou des homopolymères ou copolymères (à base d'éthylène ou de propylène) greffés.

Les copolymères non polaires peuvent être choisis dans le groupe des élastomères, précédemment décrit pour la couche centrale "B". L'agent adhésif/liant est introduit dans la composition de ladite couche à raison de 2 à 20 % et de préférence de 5 à 15 % en poids.

Quant aux copolymères polaires ils peuvent être choisis dans le groupe précédemment décrit pour la couche de peau "A".

La couche de peau/d'adhésion "C" selon l'invention comprend de 30 à 80 % en poids et de préférence de 45 à 55 % en poids de charges particulaires.

Ces diverses charges mentionnées antérieurement pour la couche "B" comprennent les charges organiques ou minérales mais sont choisies de préférence dans le groupe des charges minérales comprenant le carbonate de calcium, le sulfate de baryum, la silice, l'alumine, le kaolin, le talc et très préférentiellement le carbonate de calcium. Les diamètres moyens des charges particulaires sont choisis entre 0,2 et 3 µm, et de préférence entre 0,8 et 1,5 µm pour la couche de peau/d'adhésion "C", afin de renvoyer la jauge mince à l'extrémité de ladite couche "C".

L'ajout de TiO₂ blanc (ou d'autres pigments) est possible dans n'importe quelle couche "A", "B" ou "C".

Tous ces polymères peuvent être formulés selon des méthodes connues pour une stabilisation thermique améliorée.

### Procédé de coextrusion et méthode de fabrication du film respirable multicouche

Le film précurseur multicouche est extrudé dans une filière et est fixé sur le rouleau de refroidissement au moyen d'une boîte à vide et/ou d'une lame d'air. Le film précurseur multicouche est par la suite réchauffé et étiré entre au moins deux systèmes de rouleaux (primaire et secondaire) d'étirage. Une étape de stabilisation thermique est intégrée dans la chaîne de fabrication, afin de libérer les tensions créées dans le film lors de l'étape d'étirage.

Une étape d'impression ultérieure et une étape de gaufrage du film peuvent également exister dans le cadre de l'invention.

### Procédé de coextrusion / film par coulée

Comme précédemment évoqué, le procédé consiste :
- à coextruder simultanément au moins un film précurseur à trois couches à partir d'une filière, alors que ledit film précurseur multicouche a, au minimum, la structure suivante : ABC, ou ABA, "A" étant une couche de peau, "B" une couche centrale et "C" une autre couche de peau liante,
- et à étirer par la suite ledit film précurseur multicouche coextrudé, pour former ainsi le film multicouche respirable, en créant des micro-porosités dans la couche centrale et dans les couches de peau, étant entendu que les diverses couches sont formulées pour permettre la création de la micro-porosité qui permet le passage de vapeur d'eau mais qui empêche substantiellement le passage des liquides.

Des méthodes conventionnelles de fabrication de films multicouches ou de feuilles peuvent être facilement modifiées, pour permettre la mise en oeuvre de l'invention. Ainsi, le film multicouche peut être réalisé en utilisant une chaîne de coextrusion pour un film mince par coulée (cast film), ou une chaîne de coextrusion pour un film soufflé (blown cast).

Quand il s'agit du procédé de coextrusion du film par coulée, la température de fusion de la matière polymère peut être réglée entre environ 200°C et 250°C, selon le réglage de l'extrudeuse et le réglage de la température de la filière.

Selon la présente invention, le film multicouche précurseur peut être coextrudé et fixé comme précédemment évoqué au rouleau de refroidissement au moyen d'une lame d'air et/ou une boîte à vide. Le film multicouche précurseur est rapidement refroidi. La température du film précurseur multicouche, en quittant le rouleau de refroidissement, est réglée entre 15°C et 60°C.

### Procédé de coextrusion d'un film soufflé (blown cast)

Le film multicouche respirable peut également être fabriqué sur une chaîne de coextrusion de film soufflé. Le polymère fondu est extrudé à travers une filière multicouche annulaire, puis soufflé en une bulle qui est refroidie par de l'air dirigé à travers un anneau d'air.

La température de fusion de la matière polymère peut être réglée entre 150°C et 240°C.

La hauteur de la chaîne de refroidissement (la chaîne de refroidissement correspond au changement de brume sèche résultant de la solidification du polymère fondu) est un paramètre important à contrôler. Cette hauteur de la chaîne de refroidissement est normalement réglée entre 10 et 80 cm de la surface de la filière.

Le rapport de soufflage correspondant au rapport entre le diamètre des bulles et le diamètre de la filière est un autre paramètre du procédé à contrôler : ce rapport de soufflage contrôle l'orientation de la direction croisée. Ce rapport de soufflage varie normalement d'environ 1,5 à 4,0.

La bulle est ensuite pliée pour former un film plat couché et enroulé sur un rouleau ou fendu et enroulé sous la forme de deux rouleaux séparés.

La vitesse de la chaîne est comprise entre 20 et 150 m/min pour un film précurseur de 100 à 20 µm.

Par la suite, le film précurseur est étiré, de manière similaire à l'étape décrite dans la technologie d'extrusion d'un film multicouche par coulée.

### Amoncellement dans la filière

Lorsqu'un film monocouche comprenant des charges particulaires est extrudé, le matériau de charge s'amoncelle sur les lèvres de la filière d'extrudeuse, et bloque le procédé d'extrusion.

En dépendance avec la température, la forme de la filière, l'ouverture de la filière, la longueur de la lèvre de la filière, et avec la composition à extruder formée de polymères et de charges particulaires, l'amoncellement au niveau de la filière affecte les aspects du film et crée des lignes sillons réduisant la force du film. Pour des compositions polymères comportant une quantité de charges très importante, l'amoncellement sur la filière de l'extrudeuse après quelques heures d'utilisation est tel que l'extrudeuse doit être arrêtée et les résidus amoncelés doivent être retirés mécaniquement des lèvres de l'extrudeuse. Un tel arrêt pour ce type de procédé est très coûteux et prend du temps. C'est pourquoi les films multicouches qui, lorsqu'ils sont extrudés, provoquent moins d'amoncellement sur les lèvres de la filière, sont particulièrement recherchés. Pour amoindrir ou éliminer ce phénomène, il paraît souhaitable que la couche de peau ne comporte aucune charge particulaire et que les niveaux d'humidité et de matières volatiles dans les matières mises en oeuvre soient bien contrôlés : car lorsqu'existent simultanément une haute teneur en humidité et des matières volatiles dans le polymère fondu, le phénomène d'amoncellement sur la filière s'accélère et devient très perturbant.

C'est pourquoi et comme antérieurement mentionné, l'un des objets de l'invention est de contrôler le niveau d'amoncellement de matière sur la filière en dégazant le polymère fondu entrant dans la formation de chaque couche pour en éliminer l'humidité et les matières volatiles au cours de l'extrusion.

Un autre objet de l'invention est d'éliminer par dégazage au cours de l'extrusion les matières volatiles et l'humidité présentes qui, sous l'effet de la chaleur peuvent être libérées et empêchent la capacité à contrôler la formation de trous donnant au film sa microporosité.

L'étape de dégazage doit être réalisée dans des conditions de vide inférieur à 200 hPa dans chacune des extrudeuses.

### Utilisation des matières recyclées

Les découpes du bord résultant de la production du film respirable peuvent être recyclées dans la couche centrale. C'est pourquoi il est souhaitable de dégazer ce matériau recyclé qui peut contenir de l'air inclus. Cette opération de dégazage est réalisée dans une extrudeuse dédiée au recyclage et munie d'un moyen de dégazage.

Les matières premières polymères et charges particulaires peuvent être souhaitablement séchées, préalablement à l'extrusion, ainsi que les matières premières polymères contenant des charges hygroscopiques.

### Etirage

Le film précurseur hautement chargé, lorsqu'il est étiré d'une manière contrôlée, produit un film microporeux de jauge beaucoup plus mince, qui possède les propriétés souhaitées de respirabilité et d'imperméabilité aux liquides.

Selon l'invention, l'extrusion et lesdites étapes d'étirage sont réalisées de telle sorte que le film microporeux multicouche obtenu ait une épaisseur d'au plus 40 µm et de préférence d'au plus 25 µm.

Avant d'être étiré, le film précurseur multicouche sortant du rouleau de refroidissement, est réchauffé jusqu'à la température adéquate pour l'étirage puis est étiré pour former un film multicouche respirable.

Le film multicouche précurseur coextrudé peut être étiré par n'importe quelle méthode conventionnelle, par exemple par un étirage monoaxial ou biaxial. De préférence, le film multicouche précurseur est étiré dans une direction, qui est celle de la machine (sens longitudinal).

L'étirage est réalisé entre au moins deux systèmes de rouleaux fonctionnant à des vitesses de rotation différentes, dans une unité standard d'étirage. Le film précurseur multicouche est étiré à une température comprise entre 20°C et 95°C, et le rapport d'étirage est compris entre 1:1,5 et 1:6.

L'étirage du film précurseur multicouche peut être réalisé en une ou plusieurs étapes, suivies d'une éventuelle étape de stabilisation thermique.

Comme déjà mentionné, les systèmes de rouleaux d'étirage opèrent à des vitesses de rotation différentes, afin d'obtenir, par exemple à partir d'un film précurseur de 80 µm, un film plus mince de par exemple 20 µm, correspondant à un rapport d'étirage monoaxial de 4:1, dépendant de la relaxation ; le rapport de vitesse entre les systèmes de rouleaux est connu sous le nom de taux d'étirage : ce rapport de vitesse est mesuré entre les systèmes de rouleaux d'entrée et de sortie de la zone d'étirage. En outre, plus la distance entre les deux systèmes de rouleaux est importante, plus la réduction de la largeur du film étiré est conséquente.

Enfin, après qu'il ait été étiré, le film respirable est thermiquement stabilisé par la libération des tensions en passant sur des systèmes de rouleaux chauffés. Les températures de stabilisation thermique (réglées par les températures des systèmes de rouleaux de stabilisation) sont comprises entre 30°C et 90°C pour le polyéthylène et 30°C et 120°C pour le polypropylène.

Le film respirable multicouche selon l'invention peut également subir une étape de gaufrage après l'étirage : ce gaufrage donne un toucher plus doux et réduit la brillance du film. Ce gaufrage a lieu entre deux rouleaux réglés à une température de 35°C à 100°C.

### Utilisation du film

Le film respirable multicouche selon l'invention détient une vitesse de transmission de la vapeur d'eau d'au moins 500 g/m²/24 heures (à 38°C, 90 % d'humidité relative) et de préférence entre 2000 et 5000 g/m²/24 heures (à 38°C, 90 % d'humidité relative), sans perdre son imperméabilité aux liquides.

Le film respirable multicouche selon l'invention peut être utilisé dans la réalisation du film arrière (backsheet) d'une couche pour enfants, adultes incontinents et d'articles jetables d'hygiène ou bien assemblé avec un non tissé par laminage et utilisé en tant que produit laminé pour le film arrière d'une couche pour enfants, adultes incontinents et d'articles jetables d'hygiène.

Selon l'invention, le film multicouche respirable a une épaisseur inférieure à 40 µm et de préférence inférieure à 25 µm.

### Exemple 1

Selon l'invention cet exemple concerne la réalisation d'un film multicouche microporeux à structure asymétrique, ABC.

Le film est susceptible d'être utilisé comme film arrière (backsheet) dans des produits hygiéniques jetables. La couche "A" qui est constituée par un copolymère d'éthylène et de méthacrylate de méthyle, offre un toucher doux, alors que la couche "C" en polypropylène permet le soudage/lamination thermique.

La couche centrale "B" (intermédiaire) contribue à la transmission de la vapeur d'eau.

Trois compositions polymères différentes, ont été préparées sous la forme de mélanges secs de granulés commercialisés et de granulés composites, alimentant trois extrudeuses, "A", "B", et "C" correspondant, dans ce cas, aux trois couches différentes "A", "B", et "C". La composition polymère, présente dans chaque extrudeuse et donc dans chaque couche, est décrite dans le tableau I suivant.

**Tableau I**

| | | | |
|---|---|---|---|
| Distribution de l'épaisseur | 10 % | 80 % | 10 % |
| Formulation du polymère dans chaque couche | Couche "A" | Couche "B" | Couche "C" |
| Polymère 1 | 100 % "Lotryl 20MB08" | 49 % "Dowlex 2035" | 40% "Daplen K-2033" (RAHECO-PP) |
| Polymère 2 | | | 10% "Daploy HMS 110 F" (PP fortifié à haut point de fusion) |
| Charge | | 49% CaCO3 "Filmlink 520" | 50% CaCO₃ "Filmlink 400" (de ECC avec D.50 =2,0 µm) |
| Matière recyclée | | 2 % déchets, couche "A" : 10%, couche "B" : 80%, et couche "C" : 10% | |
| Additif | | | 1000 ppm d'antioxidant |

Le réglage de l'épaisseur de chaque couche est mesuré au moyen d'un microscope. Pour ce faire, chaque couche a été colorée légèrement, et le film obtenu a été coupé après extrusion-étirage : l'épaisseur de chaque couche a été contrôlée et réglée par l'intermédiaire de mesures au microscope.

Les divers matériaux mis en oeuvre dans la réalisation du film et cités dans le tableau I, sont décrits ci-après :
- le "Daplen K-2033" de Borealis est un copolymère hétérophase aléatoire (RAHECO). Les copolymères de polypropylènes hétérophases ont, en principe, une structure di-phase, comprenant une matrice et une phase élastomère. L'indice de fluidité était de 8,0 g/10 min (MFI norme ASTM D 1238 - 2,16 kg - 230°C) et le point de fusion d'environ 140°C mesuré par calorimétrie différentielle à balayage ;
- le "Daploy HMS 110F" de Borealis est un polypropylène à haut point de fusion renforcé. C'est un polypropylène homopolymère à très longue ramification. Dans les mélanges avec ce type de polypropylène, sa présence augmente de manière significative la capacité de fusion du mélange, la capacité de recyclage et la compatibilité entre les diverses matières polymères. L'indice de fluidité est de 5,0 g/10 min (MFI norme ASTM D 1238 - 2,16 kg - 230°C) et le point de fusion d'environ 163°C ;
- le "Filmlink 520" de English China Clay (ECC) est une charge de carbonate de calcium (CaCO₃) broyé humide ayant un diamètre moyen D50 des particules de 2,0 µm. Elle possède une enveloppe hydrophobe de 1 % et un Elrepho (brillance ISO) de 90.
- le "Filmlink 400" de English China Clay (ECC) est une charge de carbonate de calcium broyé humide (CaCO₃) avec un diamètre moyen D50 des particules de 1,2 µm. Cette charge possède un revêtement hydrophobe de 1 % et un Elrepho (brillance ISO) de 90 ;
- le "Dowlex 2035" de Dow est un polyéthylène linéaire à basse densité à base d'octène ayant un indice de fluidité de 6,0 g/10 min (MFI norme ASTM D 1238 - 2,16 kg - 190°C) et une densité de 0,919;
- le "Lotryl 20 MB08" d'Atochem est un copolymère d'éthylène et de méthacrylate de méthyle ayant un indice de fluidité de 8,0 g/10 min (MFI norme ASTM D 1238 - 2,16 kg - 190°C) avec une teneur en méthacrylate de méthyle de 20 %, formulé avec des agents glissants et antibloquants, afin de faciliter le procédé.

Dans la couche centrale "B" on ajoute 10 % de matière recyclée, provenant du film coextrudé, sous la forme de découpes de bord et/ou découpée sur les rouleaux finaux. La matière recyclée a été préalablement travaillée sur une chaîne de regranulation où le film a été coupé et réextrudé à travers une extrudeuse de recyclage.

Les matières premières ont été formulées pour être stables à la chaleur selon les formulations de l'état de la technique.

Le CaCO₃ a été prémélangé dans la formulation LLDPE "Dowlex 2035" et dans le mélange PP de "Daplen K20333" et "Daploy HM 110F", sur une extrudeuse à double vis munie d'orifices. Le composé a été séché à 80°C pendant environ 4 heures avant la production du film.

Le film précurseur à trois couches, a été coulé par coextrusion sur un rouleau de refroidissement et fixé par une lame d'air et une boîte à vide. Cette dernière a été également utilisée pour évacuer la fumée des lèvres de la filière au moyen d'un appareil d'aspiration.

Les températures de l'extrudeuse ont été réglées entre 180°C et 230°C, la température de l'adaptateur et de la filière étant légèrement supérieure à 235°C. Une filière automatique a été utilisée pour un contrôle précis de la jauge. On parvient à une tolérance de l'épaisseur inférieure à ± 4 %. La température de fusion a été mesurée à environ 230°C.

Tous les polymères fondus issus des trois extrudeuses ont été fortement dégazés en réglant l'appareil de dégazage, sur chaque extrudeuse, à un niveau de vide inférieur à 200 hPa.

Le film précurseur multicouche d'une épaisseur de 80 µm a été produit à une vitesse de chaîne d'environ 25 m/min.

Après avoir été étiré dans un rapport 4:1, le film atteignait une épaisseur de 20 µm et une respirabilité d'approximativement 2500 g/m²/24 heures (à 38°C avec une humidité relative de 90 %).

Tous les composés ont été facilement travaillés sur la chaîne d'extrusion. Aucun problème d'humidité n'a été constaté aussi bien dans le procédé que dans le film. Les bonnes conditions de dégazage sur les extrudeuses ont permis d'éviter les amoncellements habituellement constatés sur la filière, pas même après 8 heures de fonctionnement continu.

En outre la couche de peau contenant la matière première "Lotryl" a été placée de manière telle qu'elle soit en contact avec le rouleau de refroidissement, prévenant ainsi le dépôt de CaCO₃ sur le rouleau.

Les découpes de bord ont été extraites du procédé et regranulées dans une extrudeuse à dégazage, opérant à un niveau de vide inférieur à 200 hPa. Les granulés recyclés ont été incorporés dans la couche centrale "B" dans un rapport en poids de 10 %.

Après la stabilisation thermique, un gaufrage a été appliqué sur le film par chauffage et compression du film sous haute pression dans un moyen de gaufrage approprié. Les rouleaux gaufrants avaient été gravés selon le modèle désiré.

Une impression a été effectuée en ligne après l'étape de gaufrage.

Le film a été refroidi en ligne et stocké en tant que produit fini sous forme de rouleau.

### Exemple 2

Cet exemple concerne la réalisation d'un film multicouche microporeux à structure symétrique CBC selon l'état de la technique.

La composition polymère présente dans chaque extrudeuse est décrite dans le tableau II suivant.

**Tableau II**

| | | | |
|---|---|---|---|
| Distribution de l'épaisseur | 15 % | 70 % | 15% |
| Formulation du polymère dans chaque couche | Couche "C" | Couche "B" | Couche "C" |
| Polymère 1 | 50% RAHECO PP "Daplen K2033" | 38 % LLDPE "Dow Elite 5200" | 50% RAHECO PP "Daplen K2033" |
| Polymère 2 | | 10% LDPE "Dow SC 7641" | |
| Charge | 50% CaCO₃ "Filmlink 400" | 52% CaCO₃ "Filmlink 520" | 50% CaCO₃ "Filmlink 400" |

Les conditions du débit de l'extrudeuse, représentant la distribution de l'épaisseur des couches en %, ont été réglées à 15:70:15.

Les divers matériaux mis en oeuvre dans la réalisation des couches et présentés dans le tableau II, sont détaillés ci-après :
- l'"Elite 5200" de Dow est un polyéthylène linéaire à basse densité à base d'octène, d'indice de fluidité de 4,0 g/10 min (MFI norme ASTM D 1238 - 2,16 kg - 190°C) et de densité 0,917.
- le "Dow SC 7641" de Dow est un LDPE (polyéthylène basse densité ramifié) d'indice de fluidité de 2,0 g/10 min (MFI norme ASTM D 1238 - 2,16 kg - 190°C) et de densité 0,924.

Dans les couches "C", les matériaux ont été introduits sous la forme de composés prêts à usage qui ont été réalisés dans une extrudeuse à double vis à dégazage, dans le but de réduire l'humidité contenue. Les composés ont été produits dans les mêmes conditions que pour l'exemple I.

Dans la couche centrale "B" le matériau polymère utilisé se composait d'un mélange sec comprenant 52 % de CaCO₃, 38 % de "Dow Elite 5200" et 10 % de "Dow SC 7641".

Le film précurseur a été coulé sur un rouleau de refroidissement, comme dans l'exemple I. La température de fusion était d'environ 235°C, la température de la filière a été réglée à 230°C. La vitesse de la chaîne était d'environ 30 m/min pour la production du film précurseur multicouche de 60 µm d'épaisseur.

Tous les matériaux polymères fondus ont été fortement dégazés sur chaque extrudeuse, en réglant l'appareil de dégazage à un niveau de vide inférieur à 200 hPa.
Tous les composés ont été facilement travaillés sur la chaîne de coulage. Aucun problème d'humidité n'a été rapporté. Ces bonnes conditions de dégazage sur les extrudeuses se sont manifestées par une absence de dépôt sur la filière : aucun amoncellement n'a été observé sur la filière, pas même après 6 heures de fonctionnement continu.

Après étirage dans un rapport d'environ 3:1, le film précurseur de 60 µm à 3 couches atteignait une épaisseur de 20 µm à une vitesse d'enroulement de 90 m/min. La vitesse de transmission de la vapeur d'eau était de 3000 g/m²/24 heures (à 38°C avec une humidité relative de 90 %).

Le film microporeux a été coupé le long de la chaîne avant enroulage, puis il a été laminé à chaud selon une de ses faces sur un non-tissé en polypropylène. L'autre face du film a été collée à chaud sur un article jetable. La force de collage à chaud entre les deux composants, le film respirable multicouche et le tissu non tissé était excellente, comme l'a montré l'arrachement des fils lors du pelage.

### Exemple 3

Cet exemple concerne la réalisation d'un film multicouche microporeux à structure symétrique ABA selon l'invention.

**Tableau III**

| | | | |
|---|---|---|---|
| Distribution de l'épaisseur | 10 % | 80 % | 10% |
| Formulation du polymère dans chaque couche | Couche "A" | Couche "B" | Couche "A" |
| Polymère 1 | 100% EMA "Lotryl 20 MB08" | 50 % LLDPE "Dowlex 2035" | 100% EMA "Lotryl 20 MB08" |
| Polymère 2 | | | |
| Charge | | 48% CaCO₃ "Filmlink 520" | |
| Additif | | 2% TiO₂ | |

Les conditions du débit de l'extrudeuse représentant la distribution de l'épaisseur des couches en % ont été réglées à 10:80:10.

Ces divers matériaux, mis en oeuvre dans la réalisation des diverses couches et présentés dans le tableau III, sont détaillés ci-après :

La vitesse de la chaîne était d'environ 20 m/min pour produire un film précurseur de 100 µm. Le rapport d'étirage était d'environ 4:1, aboutissant à un film de 25 µm à une vitesse d'enroulement de 80 m/min.

Les températures des extrudeuses alimentant la couche "A" ont été réglées approximativement à 220°C dans la zone finale alors que la température dans la dernière zone de l'extrudeuse alimentant la couche "B" a été réglée à 240°C. La température de la filière était inférieure à 230°C.

Le film produit avait une surface très douce au toucher et une vitesse de transmission de la vapeur d'eau d'environ 1500 g/m²/24 heures (à 38°C, avec une humidité relative de 90 %).

L'amoncellement sur la filière a été fortement réduit car même après 12 heures de fonctionnement, aucun signe d'amoncellement sur la filière n'a pu être observé. Aucune présence de CaCO₃ n'a été notée sur le rouleau de refroidissement ou sur tout autre rouleau de la machine.

L'ajout de TiO₂ dans la couche centrale a amélioré l'opacité du film.

### Exemple 4

Cet exemple concerne la réalisation d'un film multicouche microporeux à structure symétrique ACBCA selon l'invention.

**Tableau IV**

| | | | | | |
|---|---|---|---|---|---|
| Distribution de l'épaisseur | 10 % | 15 % | 50 % | 15 % | 10% |
| Formulation du polymère dans chaque couche | Couche "A" | Couche "C" | Couche "B" | Couche "C" | Couche "A" |
| Polymère 1 | 100 % EMA "Lotryl 20 MB08" | 30 % RAHECO PP "Daplen K-2033" | 48 % RAHECO PP "Daplen K-2033" | 30 % RAHECO PP "Daplen K-2033" | 100% EMA "Lotryl 20 MB08" |
| Polymère 2 | | 20 % PP copolymère "Adflex X102S" | | 20 % PP copolymère "Adflex X102S" | |
| Charge | | 50 % CaCO₃ "Filmlink 400" | 52 % CaCO₃ "Filmlink 520" | 50 % CaCO₃ "Filmlink 400" | |

Les divers matériaux, mis en oeuvre dans la réalisation des diverses couches et présentés dans le tableau IV, sont détaillés ci-après :

L' "Adflex X102S" de Montell est un copolymère élastomère de polypropylène avec un indice de fluidité de 8,0 g/10 min (MFI norme ASTM D 1238 - 2,16 kg - 230°C) et une densité de 0,890. Il permet la compatibilité entre matières polymères, améliorant ainsi l'adhésion entre la couche "A" et la couche "B" et offre en outre un toucher plus doux.

L'extrudeuse alimentant la couche "A" a été réglée à une température de 220°C. Pour l'extrudeuse alimentant les couches "B" et "C", la température de fusion a été réglée à 240°C.

Un film précurseur de 80 µm a été produit à une vitesse de 25 m/min. Le film a été étiré approximativement dans un rapport de 4:1, dans le but d'obtenir un film respirable d'approximativement 20 µm d'épaisseur.

12 % de matière recyclée en ligne ont été ajoutés à la couche centrale "B". Le matériau recyclé a été préalablement regranulé sur une extrudeuse à dégazage avec un niveau de vide inférieur à 200 hPa.

Aucun amoncellement n'a été observé sur la filière, pas même après 12 heures de fonctionnement continu. Aucune présence de CaCO₃ n'a été notée sur les rouleaux.

Le film avait une vitesse de transmission de vapeur d'eau de 3200 g/m²/24 heures (à 38°C avec une humidité relative de 90 %).

## Revendications

1. Méthode de fabrication d'un film polyoléfinique à structure multicouche, ayant simultanément les propriétés d'être perméable à la vapeur d'eau, et d'être imperméable aux liquides comprenant les étapes de :
- la coextrusion, à partir d'une filière, d'au moins trois couches composées de matériaux polymères thermoplastiques, formant un film précurseur ayant au minimum la structure suivante : ABC, ou ABA, où "A" est une couche de peau, "B" est une couche centrale et "C" est une couche de peau/d'adhésion ;
- l'étirage du film précurseur à multicouches coextrudées pour former le film multicouche perméable à la vapeur d'eau mais imperméable aux liquides,
où :
- la couche de peau "A" contient au moins un copolymère polyoléfinique thermoplastique polaire et/ou un polymère polyoléfinique greffé ayant un module E inférieur à 50 mPa (norme ASTM n° 882 - film de 15 µm par coulée - cast film), une mesure de fluidité par "Melt Flow Index" (MFI norme ASTM D1238 2,16 kg, 190°C pour les polyéthylènes et 230°C pour les polypropylènes), comprise entre 1,5 et 10.g/10 min et une vitesse de transmission de la vapeur d'eau d'au moins 100 g/m²/24h à 38°C et 90 % d'humidité relative ;
- la couche centrale "B" contient au moins un homopolymère et/ou un copolymère polyoléfinique thermoplastique, au moins une charge particulaire et éventuellement un ou plusieurs élastomères ;
- la couche de peau/d'adhésion "C" contient au moins un agent liant d'adhésion et/ou un homopolymère et/ou copolymère polyoléfinique thermoplastique et au moins une charge particulaire.

2. Méthode selon la revendication 1, **caractérisée en ce que** l'étape d'extrusion comprend la coextrusion simultanée d'au moins trois couches "A", "B" et "C", dont les épaisseurs de chacune d'entre elles, qui s'expriment en pourcentage de l'épaisseur totale du film multicouche respirable, sont :
. de 5 % à 30 % d'épaisseur pour la couche "A",
. de 40 % à 90 % d'épaisseur pour la couche "B",
. de 5 % à 30 % d'épaisseur pour la couche "C".

3. Méthode selon les revendications 1 ou 2, **caractérisée en ce que** les homopolymères ou copolymères entrant dans la composition de la couche centrale "B" sont choisis dans le groupe comprenant les polyéthylènes homo et/ou copolymères et/ou les polypropylènes homo et/ou copolymères.

4. Méthode selon la revendication 3, **caractérisée en ce que** les polyéthylènes entrant dans la composition de la couche centrale "B" sont les polyéthylènes linéaires à basse densité.

5. Méthode selon l'une quelconque des revendications précédentes, **caractérisée en ce que** les polymères d'éthylène homo ou copolymères entrant dans la composition de la couche centrale "B" sont choisis parmi ceux ayant une densité comprise dans l'intervalle 0,915 à 0,965 (norme ASTM 1505).

6. Méthode selon la revendication 5, **caractérisée en ce que** les polymères d'éthylène homo ou copolymères entrant dans la composition de la couche centrale "B" sont préférentiellement choisis parmi ceux ayant une densité comprise entre 0,915 et 0,935.

7. Méthode selon l'une quelconque des revendications 3 à 6, **caractérisée en ce que** les polyéthylènes linéaires à basse densité sont choisis parmi ceux ayant une densité comprise entre 0,890 et 0,940.

8. Méthode selon la revendication 7, **caractérisée en ce que** les polyéthylènes linéaires à basse densité sont choisis dans le groupe des copolymères d'éthylène et de comonomères alpha-oléfiniques en C4 à C10.

9. Méthode selon la revendication 8, **caractérisée en ce que** les comonomères alpha-oléfiniques en C4 à C10 sont choisis dans le groupe comprenant le butène, le pentène, l'héxène, le 4-méthylpentène, l'héptène et l'octène.

10. Méthode selon la revendication 3, **caractérisée en ce que** les polymères de propylène homo ou copolymères sont choisis dans le groupe constitué par les homopolymères de propylène, les copolymères de propylène avec de l'éthylène, les copolymères de propylène avec des comonomères alpha-oléfiniques en C4 à C10.

11. Méthode selon la revendication 10, **caractérisée en ce que** les copolymères de propylène et d'alpha-oléfine en C4 à C10 ont une teneur en alpha-oléfine comprise entre 0,1 % et 40 % en poids.

12. Méthode selon la revendication 11, **caractérisée en ce que** les copolymères de propylène et d'alpha-oléfine en C4 à C10 ont une teneur en alpha-oléfine comprise entre 1 % et 10 % en poids.

13. Méthode selon l'une quelconque des revendications 1 à 12, **caractérisée en ce que** les polymères et/ou copolymères de la couche centrale "B" sont choisis de telle manière que leur indice de fluidité mesuré par la méthode de "Melt Flow Index" (MFI) est compris entre 0,2 et 15 g/10 min.

14. Méthode selon l'une quelconque des revendications 1 à 13, **caractérisée en ce que** la couche centrale "B" contient au moins une charge particulaire d'origine minérale ou organique, à raison de 30 à 80 % en poids du cumul de ladite charge particulaire et de la matière polymère.

15. Méthode selon la revendication 14, **caractérisée en ce que** la couche centrale "B" contient au moins une charge particulaire d'origine minérale ou organique à raison de préférentiellement 45 à 55 % en poids du cumul de la charge particulaire et de la matière polymère.

16. Méthode selon l'une quelconque des revendications 1 à 15, **caractérisée en ce que** les élastomères mis en oeuvre dans la couche centrale "B", sont choisis dans le groupe constitué par les caoutchoucs éthylène-propylène (EPR), caoutchoucs éthylène-propylène-diène (EPDM), styrène-butadiène-styrène (SBS), styrène-éthylène-butadiène-styrène (SEBS), caoutchoucs styrène-butadiène (SBR), styrène-isoprène-styrène (SIS), caoutchoucs butyle (BR), caoutchoucs nitrile (NBR), caoutchoucs hydrogéno-nitrile-butyle et acétate polyvinyle mis en oeuvre seuls ou en mélange avec des polymères semi-cristallins choisis parmi le polyéthylène et le polypropylène.

17. Méthode selon la revendication 16, **caractérisée en ce que** la fraction élastomérique est choisie dans le groupe des polypropylènes (homopolymères) avec des blocs amorphes et semi-cristallins, des copolymères de propylène/éthylène ou alpha-oléfine avec des blocs amorphes et semi-cristallins.

18. Méthode selon l'une quelconque des revendications 16 et 17, **caractérisée en ce que** la fraction élastomérique est partiellement ou complétement réticulée.

19. Méthode selon l'une quelconque des revendications 1 à 18, **caractérisée en ce que** la couche centrale "B" contient une certaine proportion de matériaux multicouches recyclés, récupérés dans le procédé avant étirage, après étirage, ou après assemblage du film.

20. Méthode selon la revendication 19, **caractérisée en ce que** la quantité des déchets de matériaux multicouches recyclés dans la couche centrale "B" varie de 0 à 30 % en poids par rapport à ladite couche.

21. Méthode selon la revendication 19, **caractérisée en ce que** la quantité des déchets de matériaux multicouches recyclés dans la couche centrale "B" varie préférentiellement de 0 à 15 % en poids par rapport à ladite couche.

22. Méthode selon l'une quelconque des revendications 1 ou 2, **caractérisée en ce que** la couche de peau "A" microporeuse est formée d'au moins un copolymère polaire à base d'éthylène et/ou de polymère polyoléfinique greffé.

23. Méthode selon la revendication 22, **caractérisée en ce que** le copolymère éthylénique polaire mis en oeuvre dans la réalisation de la couche "A" est composé d'éthylène et d'au moins un comonomère à caractère polaire choisi dans le groupe constitué par les esters vinyliques, les acides et les esters acryliques et méthacryliques.

24. Méthode selon l'une quelconque des revendications 22 ou 23, **caractérisée en ce que** le copolymère éthylénique polaire comporte de l'éthylène et au moins un comonomère choisi dans le groupe constitué par l'acétate de vinyle, le propionate de vinyle, l'acide acrylique, l'acide méthacrylique, l'acrylate de méthyle, l'acrylate d'éthyle, l'acrylate de n-propyle, l'acrylate d'isopropyle, l'acrylate de n-butyle, l'acrylate de t-butyle, l'acrylate d'isobutyle, le méthacrylate de méthyle, le méthacrylate d'éthyle, le méthacrylate de n-propyle, le méthacrylate d'isopropyle, le méthacrylate de n-butyle, le méthacrylate de t-butyle, le méthacrylate d'isobutyle.

25. Méthode selon l'une quelconque des revendications 22 à 24, **caractérisée en ce que** les copolymères d'éthylène et d'au moins un comonomère polaire sont formés d'au plus 30 % en poids de comonomère.

26. Méthode selon l'une quelconque des revendications 22 à 25, **caractérisée en ce que** les polymères oléfiniques sont greffés au moyen d'acide acrylique, d'acide méthacrylique, d'anhydride maleïque, d'acrylates et méthacrylates d'alkyle dans lesquels l'alkyle est une chaîne hydrocarbonée de C1 à C8.

27. Méthode selon l'une au moins des revendications 1 à 20, **caractérisée en ce que** les homopolymères et/ou copolymères oléfiniques de la couche de peau/d'adhésion "C" sont choisis dans le groupe qui comprend des polyéthylènes et/ou des polypropylènes et/ou des copolymères d'éthylène-propylène et d'éthylène et d'alpha-oléfine.

28. Méthode selon la revendication 27, **caractérisée en ce que** les composants polyoléfiniques homopolymères et/ou copolymères de la couche de peau/d'adhésion "C" sont choisis dans le groupe formé par des polyéthylènes linéaires à basse densité, de densité comprise entre 0,880 et 0,940, des copolymères d'éthylène et de comonomères alpha-oléfiniques en C4 à C10, des polyéthylènes de densité comprise entre 0,915 et 0,965, des polypropylènes et des copolymères de propylène et d'éthylène choisis parmi les copolymères bloc aléatoires.

29. Méthode selon l'une quelconque des revendications 1 à 28, **caractérisée en ce que** l'agent adhésif/liant présent dans la couche de peau/d'adhésion "C" est choisi dans le groupe des copolymères d'éthylène et de comonomères polaires ou non polaires, des copolymères de propylène et de comonomères polaires ou non polaires et/ou des homopolymères ou copolymères greffés, à base d'éthylène ou de propylène.

30. Méthode selon la revendication 29, **caractérisée en ce que** les copolymères polaires sont choisis parmi ceux définis dans l'une quelconque des revendications 22 à 25.

31. Méthode selon la revendication 29, **caractérisée en ce que** les copolymères non polaires sont choisis dans le groupe constitué par des élastomères définis dans l'une quelconque des revendications 16 à 18.

32. Méthode selon l'une quelconque des revendications 1 à 31, **caractérisée en ce que** l'agent adhésif/liant de la couche de peau/d'adhésion "C" entre dans la composition de ladite couche à raison de 2 à 20 % en poids.

33. Méthode selon la revendication 32, **caractérisée en ce que** l'agent adhésif/liant entre dans la composition de ladite couche "C" préférentiellement à raison de 5 % à 15 % en poids.

34. Méthode selon l'une quelconque des revendications 1 à 33, **caractérisée en ce que** la couche de peau "C" comprend de 30 à 80 % en poids de charges particulaires.

35. Méthode selon la revendication 34, **caractérisée en ce que** la couche de peau "C" comprend préférentiellement de 45 % à 55 % en poids de charges particulaires.

36. Méthode selon l'une quelconque des revendications 1 à 35, **caractérisée en ce que** les charges particulaires mises en oeuvre dans les couches centrale "B" et de peau/d'adhésion "C" sont d'origine inorganique ou organique choisies dans le groupe constitué par les poudres de polyéthylènes, de polyamides, de polyesters, ou de polyuréthanes de haute densité et de poids moléculaire élevé ; le carbonate de baryum ; le carbonate de calcium ; le carbonate de magnésium ; le sulfate de magnésium ; le sulfate de baryum ; le sulfate de calcium, l'hydroxyde d'aluminium ; l'hydroxyde de magnésium, l'oxyde de calcium ; l'oxyde de magnésium ; le dioxyde de titane et l'oxyde de zinc, l'argile, le kaolin, le talc, la silice, la terre à diatomées, les poudres de verre, de mica, d'aluminium et les zéolites.

37. Méthode selon l'une quelconque des revendications 1 à 36, **caractérisée en ce que** les charges particulaires mises en oeuvre ont un diamètre moyen, dans la couche centrale "B" choisi entre 0,5 et 5 µm et dans la couche de peau/d'adhésion "C" entre 0,2 et 3 µm.

38. Méthode selon la revendication 37, **caractérisée en ce que** les charges particulaires mises en oeuvre dans les couches "B" et "C" ont un diamètre moyen préférentiellement compris entre 0,8 et 2,2 µm pour la couche "B" et entre 0, 8 et 1, 5 µm pour la couche "C".

39. Méthode selon l'une quelconque des revendications 1 à 38, **caractérisée en ce que** le film précurseur multicouche est obtenu par coextrusion à travers une filière plate d'un film coulé (cast film), à une température comprise entre 200°C et 250°C, suivi d'un refroidissement, par l'intermédiaire d'un rouleau approprié, à une température comprise entre 15°C et 60°C.

40. Méthode selon l'une au moins des revendications 1 à 38, **caractérisée en ce que** le film précurseur multicouche est obtenu par coextrusion à travers une filière annulaire d'un film soufflé (blown cast) à une température comprise entre 150°C et 240°C, suivi d'un refroidissement dans une chaîne réglée entre 10 et 80 cm de la surface de la filière et un rapport de soufflage compris entre 1,5 et 4,0.

41. Méthode selon l'une quelconque des revendications 1 à 40, **caractérisée en ce que** les matériaux polymères, les charges et les composés intervenant dans la fabrication des diverses couches du film précurseur multicouche sont soumis à un séchage préalable à l'extrusion.

42. Méthode selon l'une quelconque des revendications 1 à 41, **caractérisée en ce que** les matières volatiles, l'humidité et l'air inclus dans les matériaux intervenant dans la fabrication des diverses couches du film précurseur multicouche sont éliminés par dégazage au cours de l'extrusion.

43. Méthode selon l'une quelconque des revendications 1 à 42, **caractérisée en ce que** le film précurseur multicouche est étiré selon le sens de la machine, en une ou plusieurs étapes, à une température comprise entre 20°C et 95°C et un rapport d'étirage (mesuré entre l'entrée et la sortie de la zone d'étirage) compris entre 1:1,5 et 1:6 pour que le film multicouche ait une épaisseur d'au plus 40 µm.

44. Méthode selon la revendication 43, **caractérisée en ce que** le taux d'étirage est réglé pour que le film multicouche étiré ait une épaisseur préférentiellement d'au plus 25 µm.

45. Méthode selon l'une quelconque des revendications 1 à 44, **caractérisée en ce que** le film multicouche microporeux sortant de l'étirage est soumis à une étape de gaufrage, à une température comprise entre 35°C et 100°C.

46. Méthode selon l'une quelconque des revendications 1 à 45, **caractérisée en ce que** le film multicouche microporeux sortant de l'étirage est soumis à une étape de stabilisation thermique, à une température comprise entre 30°C et 120°C.

47. Film multicouche microporeux respirable susceptible d'être obtenu par la mise en oeuvre de la méthode selon l'une quelconque des revendications 1 à 46, **caractérisé en ce que** son épaisseur est inférieure à 40 µm.

48. Film multicouche microporeux respirable selon la revendication 47, **caractérisé en ce que** son épaisseur est préférentiellement inférieure à 25 µm.

49. Film multicouche microporeux respirable selon l'une ou l'autre des revendications 47 et 48, **caractérisé en ce qu'**il détient une vitesse de transmission de la vapeur d'eau d'au moins 500 g/m²/24 heures (à 38°C, 90 % d'humidité relative).

50. Film multicouche microporeux respirable selon la revendication 49, **caractérisé en ce que** sa vitesse de transmission de la vapeur d'eau est de préférence comprise entre 2000 et 5000 g/m²/24 heures.

51. Film multicouche microporeux respirable selon l'une quelconque des revendications 47 à 50, **caractérisé en ce qu'**il est assemblé par laminage avec un tissu non tissé.

52. Utilisation du film multicouche microporeux respirable selon l'une quelconque des revendications 47 à 50 en tant que film arrière d'une couche pour enfants, adultes incontinents et d'articles jetables d'hygiène.

53. Utilisation d'un film multicouche microporeux respirable selon la revendication 51, assemblé par laminage avec un tissu non tissé, en tant que produit laminé pour couche pour enfants, adultes incontinents et pour articles jetables d'hygiène.

## Claims

1. A method for the manufacture of a polyolefin film having a multilayer structure, simultaneously having the properties of being permeable to water vapour, and of being impermeable to liquids, comprising the steps of:
- the coextrusion, from a nozzle, of at least three layers composed of thermoplastic polymer materials, forming a precursor film having at least the following structure: ABC, or ABA, where "A" is a layer of skin, "B" is a central layer and "C" is a layer of skin/an adhesive layer;
- the drawing of the precursor film of coextruded multilayers to form the multilayer film permeable to
water vapour but impermeable to liquids,
in which:
- the layer of skin "A" contains at least one polar thermoplastic polyolefin copolymer and/or one grafted polyolefin polymer having a module E less than 50 mPa (ASTM standard no. 882 - cast film of 15 µm), a measurement of flow by "melt flow index" (MFI standard ASTM D1238 2.16 kg, 190°C for polyethylenes and 230°C for polypropylenes), between 1.5 and 10 g/10 min and a transmission speed of the water vapour of at least 100 g/m²/24h at 38°C and 90 % relative humidity;
- the central layer "B" contains at least one homopolymer and/or one thermoplastic polyolefin copolymer, at least one particulate charge and possibly one or more elastomers;
- the layer of skin/adhesive layer "C" contains at least one bonding agent and/or one homopolymer and/or thermoplastic polyolefin copolymer and at least one particulate charge.

2. A method according to Claim 1,
**characterised in that** the extrusion step comprises the simultaneous coextrusion of at least three layers "A", "B" and "C", and the thicknesses of each of them, which are expressed as a percentage of the total thickness of the breathable multilayer film, are:
• 5 % to 30 % of the thickness for the layer "A",
• 40 % to 90 % of the thickness for the layer "B",
• 5 % to 30 % of the thickness for the layer "C".

3. A method according to Claims 1 or 2,
**characterised in that** the homopolymers or copolymers entering into the composition of the central layer "B" are chosen from the group comprising homo polyethylenes and/or copolymers and/or homo polypropylenes and/or copolymers.

4. A method according to Claim 3,
**characterised in that** the polyethylenes entering into the composition of the central layer "B" are low-density linear polyethylenes.

5. A method according to any one of the preceding Claims,
**characterised in that** the homo ethylene polymers or copolymers entering into the composition of the central layer "B" are chosen from those having a density in the range from 0.915 to 0.965 (standard ASTM 1505).

6. A method according to Claim 5,
**characterised in that** the homo or copolymer ethylene polymers entering into the composition of the central layer "B" are preferably chosen from those having a density of between 0.915 and 0.935.

7. A method according to any one of Claims 3 to 6,
**characterised in that** the low-density linear polyethylenes are chosen from those having a density of between 0.890 and 0.940.

8. A method according to Claim 7,
**characterised in that** the low-density linear polyethylenes are chosen from the group of ethylene copolymers and C4 to C10 alpha-olefin comonomers.

9. A method according to Claim 8,
**characterised in that** the C4 to C10 alpha-olefin comonomers are chosen from the group comprising butene, pentene, hexene, 4-methylpentene, heptene and octene.

10. A method according to Claim 3,
**characterised in that** the homo polymers of propylene or copolymers are chosen from the group made up by homopolymers of propylene, copolymers of propylene with ethylene, copolymers of propylene with C4 to C10 alpha-olefin comonomers.

11. A method according to Claim 10,
**characterised in that** the propylene copolymers and C4 to C10 alpha-olefin copolymers have an alpha-olefin content of between 0.1 % and 40 % by weight.

12. A method according to Claim 11,
**characterised in that** the propylene and C4 to C10 alpha-olefin copolymers have an alpha-olefin content of between 1 % and 10 % by weight.

13. A method according to any one of Claims 1 to 12,
**characterised in that** the polymers and/or copolymers of the central layer "B" are chosen in such a manner that their melt flow index measured by the "melt flow index (MFI)" method is between 0.2 and 15 g/10 min.

14. A method according to any one of Claims 1 to 13,
**characterised in that** the central layer "B" contains at least one particulate charge of mineral or organic origin, at the rate of 30 to 80 % by weight of the total of the said particulate charge and of the polymer material.

15. A method according to Claim 14,
**characterised in that** the central layer "B" contains at least one particulate charge of mineral or organic origin at the rate of preferably 45 to 55 % by weight of the total of the particulate charge and of the polymer material.

16. A method according to any one of Claims 1 to 15,
**characterised in that** the elastomers used in the central layer "B" are chosen from the group made up of ethylene-propylene rubbers (EPR), ethylene-propylene-diene rubbers (EPDM), styrene-butadiene-styrene (SBS), styrene-ethylene-butadiene-styrene (SEBS), styrene-butadiene rubbers (SRB), styrene-isoprene-styrene (SIS), butyl rubbers (BR), nitrile rubbers (NBR), hydrogeno-nitrile-butyl rubbers and polyvinyl acetate used alone or in a mixture with semi-crystalline polymers chosen from polyethylene and polypropylene.

17. A method according to Claim 16,
**characterised in that** the elastomer fraction is chosen from the group of polypropylenes (homopolymers) with amorphous, semi-crystalline blocks, propylene/ethylene or alpha-olefin copolymers with amorphous, semi-crystalline blocks.

18. A method according to any one of Claims 16 and 17,
**characterised in that** the elastomer fraction is partially or completely cross-linked.

19. A method according to any one of Claims 1 to 18,
**characterised in that** the central layer "B" contains a certain proportion of recycled multilayer materials, recuperated in the process prior to drawing, or after bonding of the film.

20. A method according to Claim 19,
**characterised in that** the quantity of waste of recycled multilayer materials in the central layer "B" varies from 0 to 30 % by weight in relation to the said layer.

21. A method according to Claim 19,
**characterised in that** the quantity of waste of recycled multilayer materials in the central layer "B" preferably varies from 0 to 15 % by weight in relation to the said layer.

22. A method according to any one of Claims 1 or 2,
**characterised in that** the microporous layer of skin "A" is formed of at least one polar copolymer on an ethylene base and or on a grafted polyolefin polymer base.

23. A method according to Claim 22,
**characterised in that** the polar ethylenic copolymer used in the production of the layer "A" is composed of ethylene and at least one comonomer having a polar character chosen from the group made up of vinyl esters, acrylic and methacrylic acids and esters.

24. A method according to any one of Claims 22 or 23,
**characterised in that** the polar ethylenic copolymer comprises ethylene and at least one comonomer chosen from the group made up of vinyl acetate, vinyl propionate, acrylic acid, methacrylic acid, methyl acrylate, ethyl acrylate, n-propyl acrylate, isopropyl acrylate, n-butyl acrylate, t-butyl acrylate, isobutyl acrylate, methyl methacrylate, ethyl methacrylate, n-propyl methacrylate, isopropyl methacrylate, n-butyl methacrylate, t-butyl methacrylate, isobutyl methacrylate.

25. A method according to any one of Claims 22 to 24,
**characterised in that** the ethylene copolymers and at least one polar comonomer are formed of at most 30 % by weight of comonomer.

26. A method according to any one of Claims 22 to 25,
**characterised in that** the olefin polymers are grafted by means of acrylic acid, methacrylic acid, maleic anhydride, alkyl acrylates and methacrylates in which the alkyl is a C1 to C8 hydrocarbonated chain.

27. A method according to at least one of Claims 1 to 20,
**characterised in that** the olefin homopolymers and/or copolymers of the layer of skin/adhesive layer "C" are chosen from the group which comprises polyethylenes and/or polypropylenes and/or copolymers of ethylene-propylene and ethylene and alpha-olefin.

28. A method according to Claim 27,
**characterised in that** the homopolymer and/or copolymer polyofefinic components of the layer of skin/adhesive layer "C" are chosen from the group formed by low-density linear polyethylenes, having a density of between 0.880 and 0.940, ethylene copolymers and C4 to C10 alpha-olefin comonomers, polyethylenes having a density of between 0.915 and 0.965, polypropylenes and copolymers of propylene and ethylene chosen from random block copolymers.

29. A method according to any one of Claims 1 to 28,
**characterised in that** the adhesive/bonding agent present in the layer of skin/adhesive layer "C" is chosen from the group of ethylene copolymers and of polar or non-polar copolymers, propylene copolymers and polar or non-polar comonomers and/or grafted homopolymers or copolymers, on a base of ethylene or propylene.

30. A method according to Claim 29,
**characterised in that** the polar copolymers are chosen from those defined in any one of Claims 22 to 25.

31. A method according to Claim 29,
**characterised in that** the non-polar copolymers are chosen from the group made up of the elastomers defined in any one of Claims 16 to 18.

32. A method according to any one of Claims 1 to 31,
**characterised in that** the adhesive/bonding agent of the layer of skin/adhesive layer "C" enters into the composition of the said layer at a rate of 2 to 20 % by weight.

33. A method according to Claim 32,
**characterised in that** the adhesive/bonding agent enters into the composition of the said layer "C" preferably at a rate of 5 % to 15 % by weight.

34. A method according to any one of Claims 1 to 33,
**characterised in that** the layer of skin "C" comprises 30 to 80 % by weight of particulate charges.

35. A method according to Claim 34,
**characterised in that** the layer of skin "C" preferably comprises 45 % to 55 % by weight of particulate charges.

36. A method according to any one of Claims 1 to 35,
**characterised in that** the particulate charges used in the central layer "B" and the layer of skin/adhesive layer "C" are of inorganic or organic origin chosen from the group made up of powders of polyethylenes, polyamides, polyesters, or polyurethane having a high density and high molecular weight; barium carbonate; calcium carbonate; magnesium carbonate; magnesium sulphate; barium sulphate; calcium sulphate, aluminium hydroxide; magnesium hydroxide, calcium oxide; magnesium oxide; titanium dioxide and zinc oxide, clay, china clay, talc, silica, diatomaceous earth, powders of glass, mica, aluminium and zeolites.

37. A method according to any one of Claims 1 to 36,
**characterised in that** the particulate charges used have an average diameter in the central layer "B" that is chosen between 0.5 and 5 µm and in the layer of skin/adhesive layer "C" of between 0.2 and 3 µm.

38. A method according to Claim 37,
**characterised in that** the particulate charges used in the layers "B" and "C" have an average diameter of preferably between 0.8 and 2.2 µm for layer "B" and of between 0.8 and 1.5 µm for layer "C".

39. A method according to any one of Claims 1 to 38,
**characterised in that** the multilayer precursor film is obtained by coextrusion through a flat nozzle of a cast film, having a temperature of between 200°C and 250°C, followed by a cooling operation, by means of an appropriate cylinder, at a temperature of between 15°C and 60°C.

40. A method according to at least one of Claims 1 to 38,
**characterised in that** the multilayer precursor film is obtained by coextrusion through an annular nozzle of a blown cast at a temperature of between 150°C and 240°C, followed by a cooling operation in a chain controlled between 10 and 80 cm of the surface of the nozzle and a blow-up ratio of between 1.5 and 4.0.

41. A method according to any one of Claims 1 to 40,
**characterised in that** the polymer materials, the charges and the compounds intervening in the manufacture of the various layers of the multilayer precursor film are subjected to drying prior to extrusion.

42. A method according to any one of Claims 1 to 41,
**characterised in that** the volatile substances, the moisture and the air included in the materials used in the manufacture of the various layers of the multilayer precursor film are eliminated by degassing during extrusion.

43. A method according to any one of Claims 1 to 42,
**characterised in that** the multilayer precursor film is drawn in the direction of the machine, in one or more steps, at a temperature of between 20°C and 95°C and a stretching ratio (measured between the inlet and the outlet of the drawing zone) of between 1:1.5 and 1:6 so that the multilayer film has a thickness of at most 40 µm.

44. A method according to Claim 43,
**characterised in that** the stretching ratio is controlled so that the drawn multilayer film has a thickness preferably of more than 25 µm.

45. A method according to one of Claims 1 to 44,
**characterised in that** the microporous multilayer film exiting from the drawing stage is subjected to an embossing stage, at a temperature of between 35°C and 100°C.

46. A method according to any one of Claims 1 to 44,
**characterised in that** the microporous multilayer film exiting from the drawing stage is subjected to a thermal stabilisation stage, at a temperature of between 30°C and 120°C.

47. A breathable microporous multilayer film that can be obtained by using the method according to any one of Claims 1 to 46,
**characterised in that** its thickness is less than 40 µm.

48. A breathable microporous multilayer film according to Claim 47,
**characterised in that** its thickness is preferably less than 25 µm.

49. A breathable microporous multilayer film according to the one or the other of Claims 47 and 48,
**characterised in that** it holds a transmission speed of the water vapour of at least 500 g/m²/24 hours (at 38°C, 90 % relative humidity).

50. A breathable microporous multilayer film in accordance with Claim 49,
**characterised in that** its transmission speed of the water vapour is preferable between 2,000 and 5,000 g/m²/24 hours.

51. A breathable microporous multilayer film according to any one of Claims 47 to 50,
**characterised in that** it is joined by calendaring with a non-woven fabric.

52. Use of a breathable microporous multilayer film according to any one of Claims 47 to 50 as the rear film of a nappy for children, a pad for incontinent adults and disposable rubber goods.

53. Use of a breathable microporous multilayer film according to Claim 51, joined by calendaring with a non-woven fabric, as a nappy for children, a pad for incontinent adults and for disposable rubber goods.

## Patentansprüche

1. Verfahren zur Herstellung eines Polyolefin-Films mit Mehrschichtenstruktur, der gleichzeitig die Eigenschaften aufweist, für Wasserdampf durchlässig und für Flüssigkeiten undurchlässig zu sein, wobei das Verfahren die folgenden Stufen umfasst:
- das Coextrudieren von mindestens drei Schichten, die aus thermoplastischen polymeren Materialien bestehen, unter Verwendung einer Ziehdüse, wobei ein Vorläuferfilm gebildet wird, der mindestens die folgende Struktur ABC oder ABA aufweist, worin "A" eine Hautschicht darstellt, "B" eine zentrale (mittlere) Schicht darstellt und "C" eine Adhäsions/Hautschicht darstellt;
- das Ausziehen (Verstrecken) des Vorläufer-Films mit coextrudierten Mehrfachschichten unter Bildung des Mehrschichten-Films, der für Wasserdampf durchlässig, jedoch für Flüssigkeiten undurchlässig ist, wobei
- die Hautschicht "A" mindestens ein polares thermoplastisches Polyolefin-Copolymer und/oder ein Polyolefin-Pfropfpolymer enthält, die aufweist einen E-Modul von < 50 mPa (nach der ASTM-Norm Nr. 882 für einen 15 µm dicken gegossenen Film), eine Fließfähigkeit, bestimmt durch den "Schmelzflussindex" (MFI-Norm nach ASTM D1238, 2,16 kg, 190 °C für Polyethylene und 230 °C für Polypropylene), zwischen 1,5 und 10 g/10 min und eine Wasserdampf-Transmissionsgeschwindigkeit von mindestens 100 g/m²/24h bei 38 °C und 90 % relativer Feuchtigkeit;
- die mittlere Schicht "B" mindestens ein thermoplastisches Polyolefin-Homopolymer und/oder -Copolymer, mindestens einen teilchenförmigen Füllstoff und gegebenenfalls ein oder mehrere Elastomere enthält; und
- die Adhäsions/Hautschicht "C" mindestens ein Adhäsions-Bindemittel und/oder ein thermoplastisches Polyolefin-Homopolymer und/oder -Copolymer und mindestens einen teilchenförmigen Füllstoff enthält.

2. Verfahren nach Anspruch 1, **dadurch gekennzeichnet, dass** die Extrusionsstufe umfasst die gleichzeitige Coextrusion von mindestens drei Schichten "A", "B" und "C", deren Dicken jeweils betragen, ausgedrückt als Prozentsatz der Gesamtdicke des atmungsaktiven Mehrschichten-Films,
• 5 bis 30 % für die Schicht "A",
• 40 bis 90 % für die Schicht "B",
• 5 bis 30 % für die Schicht "C".

3. Verfahren nach Anspruch 1 oder 2, **dadurch gekennzeichnet, dass** die Homopolymeren oder Copolymeren, die in der Zusammensetzung der mittleren Schicht "B" enthalten sind, ausgewählt werden aus der Gruppe, die umfasst die homo- und/oder copolymeren Polyethylene und/oder die homo- und/oder copolymeren Polypropylene.

4. Verfahren nach Anspruch 3, **dadurch gekennzeichnet, dass** die Polyethylene, die in der Zusammensetzung der mittleren Schicht "B" enthalten sind, lineare Polyethylene mit niedriger Dichte sind.

5. Verfahren nach einem der vorhergehenden Ansprüche, **dadurch gekennzeichnet, dass** die Homo- und/oder Copolymeren von Ethylen, die in der Zusammensetzung der mittleren Schicht "B" enthalten sind, ausgewählt werden unter denjenigen, die eine Dichte in dem Bereich von 0,915 bis 0,965 (nach der ASTM-Norm 1505) aufweisen.

6. Verfahren nach Anspruch 5, **dadurch gekennzeichnet, dass** die Homo- oder Copolymeren von Ethylen, die in der Zusammensetzung der mittleren Schicht "B" enthalten sind, vorzugsweise ausgewählt werden unter denjenigen, die eine Dichte zwischen 0,915 und 0,935 aufweisen.

7. Verfahren nach einem der Ansprüche 3 bis 6, **dadurch gekennzeichnet, dass** die linearen Polyethylene mit niedriger Dichte ausgewählt werden unter denjenigen, die eine Dichte zwischen 0,890 und 0,940 haben.

8. Verfahren nach Anspruch 7, **dadurch gekennzeichnet, dass** die linearen Polyethylene mit niedriger Dichte ausgewählt werden aus der Gruppe der Copolymeren von Ethylen und α-Olefin-Comonomeren mit 4 bis 10 Kohlenstoffatomen.

9. Verfahren nach Anspruch 8, **dadurch gekennzeichnet, dass** die α-Olefin-Comonomeren mit 4 bis 10 Kohlenstoffatomen ausgewählt werden aus der Gruppe, die Buten, Penten, Hexen, 4-Methylpenten-, Hepten- und Octen umfasst.

10. Verfahren nach Anspruch 3, **dadurch gekennzeichnet, dass** die Homo- oder Copolymeren von Propylen ausgewählt werden aus der Gruppe, die besteht aus den Homopolymeren von Propylen, den Copolymeren von Propylen und Ethylen, und den Copolymeren von Propylen und α-Olefin-Comonomeren mit 4 bis 10 Kohlenstoffatomen.

11. Verfahren nach Anspruch 10, **dadurch gekennzeichnet, dass** die Copolymeren von Propylen und α-Olefin mit 4 bis 10 Kohlenstoffatomen einen Gehalt an α-Olefin zwischen 0,1 und 40 Gew.-% aufweisen.

12. Verfahren nach Anspruch 11, **dadurch gekennzeichnet, dass** die Copolymeren von Propylen und α-Olefin mit 4 bis 10 Kohlenstoffatomen einen Gehalt an α-Olefin zwischen 1 und 10 Gew.-% aufweisen.

13. Verfahren nach einem der Ansprüche 1 bis 12, **dadurch gekennzeichnet, dass** die Polymeren und/oder Copolymeren der mittleren Schicht "B" so ausgewählt werden, dass ihr Fließfähigkeitsindex, bestimmt nach dem "Schmelzflussindex (MFI)-Verfahren" zwischen 0,2 und 15 g/10 min liegt.

14. Verfahren nach einem der Ansprüche 1 bis 13, **dadurch gekennzeichnet, dass** die mittlere Schicht "B" mindestens einen teilchenförmigen Füllstoff mineralischen oder anorganischen Ursprungs in einer Menge von 30 bis 80 Gew.-%, bezogen auf das Gesamtgewicht von teilchenförmigem Füllstoff und Polymermaterial, enthält.

15. Verfahren nach Anspruch 14, **dadurch gekennzeichnet, dass** die mittlere Schicht "B" mindestens einen teilchenförmigen Füllstoff mineralischen oder organischen Ursprungs in einer Menge von vorzugsweise 45 bis 55 Gew.-%, bezogen auf das Gesamtgewicht von teilchenförmigem Füllstoff und polymerem Material, enthält.

16. Verfahren nach einem der Ansprüche 1 bis 15, **dadurch gekennzeichnet, dass** die in der mittleren Schicht "B" eingesetzten Elastomeren ausgewählt werden aus der Gruppe, die besteht aus Ethylen-Propylen-Kautschuken (EPR), Ethylen-Propylen-Dien-Kautschuken (EPDM), Styrol-Butadien-Styrol (SBS), Styrol-Ethylen-Butadien-Styrol (SEBS), Styrol-Butadien-Kautschuken (SBR), Styrol-Isopren-Styrol (SIS), Butyl-Kautschuken (BR), Nitril-Kautschuken (NBR), Hydrogen-Nitril-Butyl-Kautschuken und Polyvinylacetat, die einzeln oder in Form einer Mischung mit semikristallinen Polymeren, ausgewählt unter Polyethylen und Polypropylen, verwendet werden.

17. Verfahren nach Anspruch 16, **dadurch gekennzeichnet, dass** die elastomere Fraktion ausgewählt wird aus der Gruppe der Polypropylene (Homopolymere) mit amorphen und semikristallinen Blöcken, der Propylen/Ethylen- oder α-Olefin-Copolymeren mit amorphen und semikristallinen Blöcken.

18. Verfahren nach einem der Ansprüche 16 und 17, **dadurch gekennzeichnet, dass** die elastomere Fraktion teilweise oder vollständig vernetzt ist.

19. Verfahren nach einem der Ansprüche 1 bis 18, **dadurch gekennzeichnet, dass** die mittlere Schicht "B" einen bestimmten Mengenanteil an recyclisierten Mehrschichten-Materialien enthält, die bei dem Verfahren vor dem Ausziehen, nach dem Ausziehen oder nach dem Zusammenfügen des Films abgetrennt (gewonnen) worden sind.

20. Verfahren nach Anspruch 19, **dadurch gekennzeichnet, dass** die Menge der Abfälle an Mehrschichten-Materialien, die in die mittlere Schicht "B" recyclisiert worden sind, zwischen 0 und 30 Gew.-%, bezogen auf das Gewicht der genannten Schicht, variiert.

21. Verfahren nach Anspruch 19, **dadurch gekennzeichnet, dass** die Menge der Abfälle an Mehrschichten-Materialien, die in die mittlere Schicht "B" recyclisiert worden sind, vorzugsweise zwischen 0 und 15 Gew.-%, bezogen auf die genannte Schicht, variiert.

22. Verfahren nach einem der Ansprüche 1 oder 2, **dadurch gekennzeichnet, dass** die mikroporöse Hautschicht "A" besteht aus mindestens einem polaren Copolymer auf Basis von Ethylen und/oder einem Polyolefin-Pfropfpolymer.

23. Verfahren nach Anspruch 22, **dadurch gekennzeichnet, dass** das bei der Herstellung der Schicht "A" verwendete polare Ethylen-Copolymer besteht aus Ethylen und mindestens einem Comonomer mit polarem Charakter, ausgewählt aus der Gruppe, die besteht aus Vinylestern, Acryl- und Methacrylsäuren und -estern.

24. Verfahren nach einem der Ansprüche 22 oder 23, **dadurch gekennzeichnet, dass** das polare Ethylen-Copolymer umfasst Ethylen und mindestens ein Comonomer, ausgewählt aus der Gruppe, die besteht aus Vinylacetat, Vinylpropionat, Acrylsäure, Methacrylsäure, Methylacrylat, Ethylacrylat, n-Propylacrylat, Isopropylacrylat, n-Butylacrylat, t-Butylacrylat, Isobutylacrylat, Methylmethacrylat, Ethylmethacrylat, n-Propylmethacrylat, Isopropylmethacrylat, n-Butylmethacrylat, t-Butylmethacrylat und Isobutylmethacrylat.

25. Verfahren nach einem der Ansprüche 22 bis 24, **dadurch gekennzeichnet, dass** die Copolymeren von Ethylen und mindestens einem polaren Comonomer zu mindestens 30 Gew.-% aus dem Comonomer bestehen.

26. Verfahren nach einem der Ansprüche 22 bis 25, **dadurch gekennzeichnet, dass** die Olefinpolymeren bepfropft sind mit Acrylsäure, Methacrylsäure, Maleinsäureanhydrid, Alkylacrylaten und -methacrylaten, in denen die Alkylgruppe eine Kohlenwasserstoffkette mit 1 bis 8 Kohlenstoffatomen ist.

27. Verfahren nach mindestens einem der Ansprüche 1 bis 20, **dadurch gekennzeichnet, dass** die Olefin-Homopolymeren und/oder-Copolymeren der Adhäsions/Haut-Schicht "C" ausgewählt sind aus der Gruppe, die Polyethylene und/oder Polypropylene und/oder Ethylen/Propylen- und Ethylen-α-Olefin-Copolymere umfasst.

28. Verfahren nach Anspruch 27, **dadurch gekennzeichnet, dass** die homopolymeren und/oder copolymeren Polyolefin-Komponenten der Adhäsions/Haut-Schicht "C" ausgewählt werden aus der Gruppe, die besteht aus linearen Polyethylenen mit niedriger Dichte, solchen mit einer Dichte zwischen 0,880 und 0,940, Copolymeren von Ethylen und α-Olefin-Comonomeren mit 4 bis 10 Kohlenstoffatomen, Polyethylenen mit einer Dichte zwischen 0,915 und 0,965, Polypropylenen und Copolymeren von Propylen und Ethylen, die unter den aleatorischen (stochastischen) Block-Copolymeren ausgewählt werden.

29. Verfahren nach einem der Ansprüche 1 bis 28, **dadurch gekennzeichnet, dass** das in der Adhäsions/Haut-Schicht "C" vorliegende Bindemittel/Adhäsionsmittel ausgewählt wird aus der Gruppe der Copolymeren von Ethylen und polaren oder nicht-polaren Comonomeren, der Copolymeren von Propylen und polaren oder nicht-polaren Comonomeren und/oder Homopolymeren oder Pfropfcopolymeren auf Basis von Ethylen und Propylen.

30. Verfahren nach Anspruch 29, **dadurch gekennzeichnet, dass** die polaren Copolymeren ausgewählt werden unter solchen, wie sie in einem der Ansprüche 22 bis 25 definiert sind.

31. Verfahren nach Anspruch 29, **dadurch gekennzeichnet, dass** die nicht-polaren Copolymeren ausgewählt werden aus der Gruppe, die besteht aus Elastomeren, wie sie in einem der Ansprüche 16 bis 18 definiert sind.

32. Verfahren nach einem der Ansprüche 1 bis 31, **dadurch gekennzeichnet, dass** das Bindemittel/Adhäsionsmittel in der Adhäsions/Haut-Schicht "C" in einer Menge von 2 bis 20 Gew.-%, bezogen auf die Zusammensetzung der genannten Schicht, enthalten ist.

33. Verfahren nach Anspruch 32, **dadurch gekennzeichnet, dass** das Bindemittel/Adhäsionsmittel vorzugsweise in einer Menge von 5 bis 15 Gew.-% in der Zusammensetzung der genannten Schicht "C" enthalten ist.

34. Verfahren nach einem der Ansprüche 1 bis 33, **dadurch gekennzeichnet, dass** die Hautschicht "C" 30 bis 80 Gew.-% tellchenförmige Füllstoffe umfasst.

35. Verfahren nach Anspruch 34, **dadurch gekennzeichnet, dass** die Hautschicht "C" vorzugsweise 45 bis 55 Gew.-% teilchenförmige Füllstoffe umfasst.

36. Verfahren nach einem der Ansprüche 1 bis 35, **dadurch gekennzeichnet, dass** die in der mittleren Schicht "B" und in der Adhäsions/Haut-Schicht "C" verwendeten teilchenförmigen Füllstoffe anorganischen oder organischen Ursprungs sind, ausgewählt aus der Gruppe, die besteht aus Pulvern aus Polyethylenen, Polyamiden, Polyestern, Polyurethanen mit hoher Dichte und mit hohem Molekulargewicht; Bariumcarbonat; Calciumcarbonat; Magnesiumcarbonat; Magnesiumsulfat; Bariumsulfat; Calciumsulfat, Aluminiumhydroxid; Magnesiumhydroxid, Calciumoxid; Magnesiumoxid; Titandioxid und Zinkoxid, Ton, Kaolin, Talk, Siliciumdioxid, Diatomeenerde, Pulvern aus Glas, Glimmer, Aluminium und Zeolithen.

37. Verfahren nach einem der Ansprüche 1 bis 36, **dadurch gekennzeichnet, dass** die verwendeten teilchenförmigen Füllstoffe in der mittleren Schicht "B" einen mittleren Durchmesser, ausgewählt aus dem Bereich von 0,5 bis 5 µm, und in der Adhäsions/Haut-Schicht "C" einen mittleren Durchmesser zwischen 0,2 und 3 µm aufweisen.

38. Verfahren nach Anspruch 37, **dadurch gekennzeichnet, dass** die in den Schichten "B" und "C" verwendeten teilchenförmigen Füllstoffe einen mittleren Durchmesser haben, der vorzugsweise zwischen 0,8 und 2,2 µm für die Schicht "B" und zwischen 0,8 und 1,5 µm für die Schicht "C" liegt.

39. Verfahren nach einem der Ansprüche 1 bis 38, **dadurch gekennzeichnet, dass** der Mehrschichten-Vorläuferfilm erhalten wird durch Coextrusion eines gegossenen Films durch eine Breitschlitz-Ziehdüse bei einer Temperatur zwischen 200 und 250 °C und anschließendes Abkühlen mittels einer geeigneten Walze auf eine Temperatur zwischen 15 und 60 °C.

40. Verfahren nach mindestens einem der Ansprüche 1 bis 38, **dadurch gekennzeichnet, dass** der Mehrschichten-Vorläuferfilm erhalten wird durch Coextrusion eines geblasenen Films durch eine ringförmige Ziehdüse bei einer Temperatur zwischen 150 und 240 °C, gefolgt von einer Abkühlung in einer Kette eingestellt auf einen Wert zwischen 10 und 80 cm der Oberfläche der Ziehdüse und bei einem Blasverhältnis zwischen 1,5 und 4,0.

41. Verfahren nach einem der Ansprüche 1 bis 40, **dadurch gekennzeichnet, dass** die polymeren Materialien, die Füllstoffe und die Verbindungen, die an der Herstellung der verschiedenen Schichten des Mehrschichten-Vorläuferfilms beteiligt sind, vor der Extrusion einer Trocknung unterworfen werden.

42. Verfahren nach einem der Ansprüche 1 bis 41, **dadurch gekennzeichnet, dass** die flüchtigen Materialien, die Feuchtigkeit und die Luft, die in den Materialien enthalten sind, die an der Herstellung der verschiedenen Schichten des Mehrschichten-Vorläuferfilms beteiligt sind, durch Entgasung während der Extrusion eliminiert werden.

43. Verfahren nach einem der Ansprüche 1 bis 42, **dadurch gekennzeichnet, dass** der Mehrschichten-Vorläuferfilm in Maschinenlaufrichtung ausgezogen (verstreckt) wird in einer oder mehreren Stufen bei einer Temperatur zwischen 20 und 95 °C und mit einem Verstreckungs- bzw. Ausziehverhältnis (gemessen zwischen dem Eintritt und dem Austritt aus der Verstreckungs- bzw. Ausziehzone) zwischen 1:1,5 und 1 : 6 ausgezogen (verstreckt) wird, sodass der Mehrschichtenfilm eine Dicke von höchstens 40 µm aufweist.

44. Verfahren nach Anspruch 43, **dadurch gekennzeichnet, dass** der Verstreckungs- bzw. Ausziehgrad so eingestellt wird, dass der ausgezogene (verstreckte) Mehrschichtenfilm eine Dicke von vorzugsweise höchstens 25 µm aufweist.

45. Verfahren nach einem der Ansprüche 1 bis 44, **dadurch gekennzeichnet, dass** der nach dem Ausziehen (Verstrecken) austretende mikroporöse Mehrschichten-Film einer Gaufrage (Prägung), bei einer Temperatur zwischen 35 und 100 °C unterworfen wird.

46. Verfahren nach einem der Ansprüche 1 bis 45, **dadurch gekennzeichnet, dass** der am Ende des Ausziehens erhaltene mikroporöse Mehrschichten-Film einer thermischen Stabilisierung bei einer Temperatur zwischen 30 und 120 °C unterworfen wird.

47. Atmungsaktiver mikroporöser Mehrschichten-Film, wie er nach dem Verfahren nach einem der Ansprüche 1 bis 46 erhältlich ist, **dadurch gekennzeichnet, dass** seine Dicke unter 40 µm liegt.

48. Atmungsaktiver mikroporöser Mehrschichten-Film nach Anspruch 47, **dadurch gekennzeichnet, dass** seine Dicke vorzugsweise unter 25 µm liegt.

49. Atmungsaktiver mikroporöser Mehrschichten-Film nach einem der Ansprüche 47 und 48, **dadurch gekennzeichnet, dass** er eine Wasserdampf-Transmissionsgeschwindigkeit von mindestens 500 g/m²/24 h (bei 38 °C, 90 % relativer Feuchtigkeit) aufweist.

50. Atmungsaktiver mikroporöser Mehrschichten-Film nach Anspruch 49, **dadurch gekennzeichnet, dass** seine Wasserdampf-Transmissionsgeschwindigkeit vorzugsweise zwischen 2000 und 5000 g/m²/24 h liegt.

51. Atmungsaktiver mikroporöser Mehrschichten-Film nach einem der Ansprüche 47 bis 50, **dadurch gekennzeichnet, dass** er durch Auflaminieren auf ein nicht-gewebtes Gewebe (Vliesstoff) hergestellt worden ist.

52. Verwendung des atmungsaktiven mikroporösen Mehrschichten-Films nach einem der Ansprüche 47 bis 50 als Unterlagenfilm für eine Windel für Kinder, inkontinente Erwachsene und für Einweg-Hygieneartikel.

53. Verwendung eines atmungsaktiven mikroporösen Mehrschichten-Films nach Anspruch 51, der durch Auflaminieren auf ein nicht-gewebtes Gewebe (Vliesstoff) hergestellt worden ist, als Laminatprodukt für eine Windel für Kinder, inkontinente Erwachsene und für Einweg-Hygieneartikel,
